(19) Europäisches Patentamt
European Patent Office
Office européen des brevets

(11) **EP 3 607 249 B1**

(12) **EUROPÄISCHE PATENTSCHRIFT**

(45) Veröffentlichungstag und Bekanntmachung des Hinweises auf die Patenterteilung:
**19.07.2023 Patentblatt 2023/29**

(21) Anmeldenummer: **18717879.3**

(22) Anmeldetag: **05.04.2018**

(51) Internationale Patentklassifikation (IPC):
*F24D 5/12* (2006.01)    *F24D 3/08* (2006.01)
*F25B 9/00* (2006.01)    *F24F 12/00* (2006.01)
*F24D 19/10* (2006.01)    *F24D 17/02* (2006.01)
*F24D 11/02* (2006.01)    *F25B 30/02* (2006.01)

(52) Gemeinsame Patentklassifikation (CPC):
**F24D 5/12; F24D 3/08; F24D 11/0242;**
**F24D 11/0285; F24D 17/02; F24D 19/1072;**
**F25B 9/008; F25B 30/02;** F24D 2200/12;
F24D 2200/14; F24D 2200/22; F24F 12/006;
F25B 2309/061; Y02B 10/20; Y02B 10/70; (Forts.)

(86) Internationale Anmeldenummer:
**PCT/EP2018/058726**

(87) Internationale Veröffentlichungsnummer:
**WO 2018/185220 (11.10.2018 Gazette 2018/41)**

(54) **WÄRMEPUMPENANLAGE**

HEAT PUMP SYSTEM

INSTALLATION DE POMPE À CHALEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.04.2017 DE 102017003355**

(43) Veröffentlichungstag der Anmeldung:
**12.02.2020 Patentblatt 2020/07**

(73) Patentinhaber: **Stiebel Eltron GmbH & Co. KG**
**37603 Holzminden (DE)**

(72) Erfinder:
• **SCHAUMLÖFFEL, Michael**
**37671 Höxter (DE)**
• **BENNING, Markus**
**37671 Höxter (DE)**
• **HESS, Michael**
**37671 Höxter (DE)**
• **RIEMENSCHNEIDER, Albert**
**37574 Einbeck (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
EP-A1- 1 731 846     EP-A1- 2 620 715
EP-A2- 2 476 970     WO-A1-2004/094921
DE-B1- 2 804 748     DE-T5-112014 000 527
DE-U1-202010 014 435

(52) Gemeinsame Patentklassifikation (CPC): (Forts.)
Y02B 30/13; Y02B 30/52; Y02B 30/56

**Beschreibung**

Die Erfindung betrifft eine Wärmepumpenanlage, insbesondere eine Wärmepumpenanlage mit einer Luftheizung, mit einem Kältemittelkreislauf zur Wärmeerzeugung, mit einer primären Vorlaufleitung, mit einer Rücklaufleitung und einem Wärmeträgermedium. Weiterhin ist ein Gaskühler im Kältemittelkreislauf vorgesehen und ein Luft/Luft-Wärmeaustauscher.

Weiterhin betrifft die Erfindung ein Verfahren zum Betrieb einer Wärmepumpenanlage, insbesondere ein Verfahren zum Betrieb einer Wärmepumpenanlage mit einer Luftheizung, bei dem in einem ersten Heizbetrieb ein Pufferschichtspeicher mit einem von einem Kältemittelkreislauf temperierten Wärmeträgerfluid, welches mittels einer Ladepumpe umgepumpt wird, auf eine Vorlauftemperatur tv gebracht wird.

Gemäß DE 10 2005 002 282 A1 ist eine Lüftungsanlage mit einem Wärmeübertrager, der von einem Außenluftstrom beaufschlagt ist, bekannt. Der Wärmeübertrager ist ein Luft/Luft-Wärmeübertrager, in dem ein Abluftstrom aus zu beheizenden Räumen Wärmeenergie auf den Außenluftstrom überträgt. Dabei überträgt die aus dem Wärmeübertrager austretende Fortluft Wärmeenergie an ein im Hochdruckbereich (WPKH) des Wärmepumpenkreises (WPK) im überkritischen Zustand betriebenes Kältemittel.

Bei Vorrichtungen der vorstehend bekannten Art wird in dem Wärmepumpenkreis neben einem Wärmeübertrager für die Erhitzung und/oder die Kühlung des Kältemittels ein zweiter Wärmeübertrager 3 und/oder Wärmeübertrager 6 vorgesehen.

Aus DE 197 02 903 C2 ist eine Klimaanlage für mehrere Räume mit einem eine Wärmepumpe umfassenden Zentralgerät bekannt. Vorzugsweise ist ein umschaltbarer Kältemittelkreis der Wärmepumpe und ein Luft/Kältemittel-Wärmetauscher vorgesehen, dem Abluft aus den Räumen und/oder Außenluft zuführbar ist. Ein Hauptwärmetauscher ist zur Beheizung von Räumen angeschlossen, und Konvektoren sind in einem ersten Heizkreis mit erster Umwälzpumpe angeordnet. Ein Nebenwärmetauscher ist zur Beheizung eines Brauchwasserspeichers in einem zweiten Heizkreis angeordnet.

Die WO 2007/080162 A2 beschreibt eine Kühl- und Belüftungseinrichtung mit einem Lufteinlass und einem Luftauslass, einemAblufteinlass, einem Abluftauslass, einem Verdampfungswärmetauscher, einer Durchfluss-Steuereinheit und einer Steuerung zum Steuern der Durchfluss-Steuereinheit. Der Lufteinlass ist mit einer Außenluftquelle verbunden. Der Luftauslass ist einem Aufenthaltsraum wie dem Inneren eines Gebäudes oder eines Fahrzeugs zugeführt. Auf diese Weise erfolgt eine Kühlung/Lüftung mittels Verdampfung, wobei lediglich zwei Lufteinlässe und zwei Luftauslässe benötigt werden.

Aus EP 2 821 727 B1 ist ein Verfahren zum Betrieb eines Lüftungsheizgerätes mit Wärmerückgewinnung bekannt. Außenluft wird über einen Luft/Luft-Wärmeübertrager geführt und nimmt im Luft/Luft-Wärmeübertrager Wärme von einer Abluft auf. Fortluft wird in Strömungsrichtung aus dem Luft/Luft-Wärmeübertrager kommend als Wärmequelle auf einen Verdampfer einer Wärmepumpe geleitet, um ein in einem Kältemittelkreislauf enthaltenes Kältemittel zu verdampfen. Zur Fortluft kann Außenluft für einen ausreichenden Energieinhalt beigemischt werden. Vom Luft/Luft-Wärmeübertrager erwärmte Zuluft mit einer ersten Temperatur von ca. 15 - 20 °C wird in einem Lufterhitzer auf eine zweite Temperatur erwärmt, die über einer Temperatur der Abluft liegt. Dabei gibt in einem Gaskühler des Luftvorwärmers $CO_2$ als Kältemittel in einem überkritischen Zustand Wärme an die Zuluft ab. Im Gaskühler wird das Kältemittel von einem ersten Zustand mit einer ersten Temperatur, die überkritisch ist, auf einen zweiten Zustand mit einer zweiten Temperatur bei einem nahezu isobaren Druck, der zwischen ca. 73,8 bar und 90 bar liegt, abgekühlt. Das $CO_2$ wird in seiner Strömungsrichtung vor dem Verdampfer durch eine Drossel auf einen Druck unterhalb von 73 bar expandiert.

Aus der DE 11 2014 000527 T5 und der EP 2 620 715 A1 sind weitere Wärmepumpenanlagen bekannt.

Mit den bekannten Vorrichtungen erfolgt eine Wärmerückgewinnung mit einer Wärmepumpe, die die Wärme der Abluft nutzt. Das Wärmeverteilsystem arbeitet in konventioneller Weise wassergeführt. Weiterhin ist ein Lüftungssystem zur Lüftung vorgesehen. Bei modernen Gebäuden, insbesondere Passivhäusern, werden weiterhin energiesparende Maßnahmen der Gebäudehülle mit entsprechenden Kosten durchgeführt.

Aufgabe der Erfindung ist es, auf effiziente und kostengünstige Weise ein Gebäude zu beheizen, insbesondere mit einer Wärmerückgewinnung.

Gelöst ist die Aufgabe mit den Merkmalen des Anspruchs 1.

In einer Strömungsrichtung x von Außenluft in die Wärmepumpenanlage ist zunächst ein Vorheizer angeordnet, der zur einer bedarfsgerechten Vorerwärmung von Außenluft AU auf einen Mindesttemperaturwert geeignet ist. Weiter ist in der Strömungsrichtung nach dem Vorheizer der Luft/Luft-Wärmeaustauscher vorgesehen, geeignet zu einer stofflich getrennten Erwärmung der Außenluft AU mittels Abluft AB. In der Strömungsrichtung x nach dem Luft/Luft-Wärmeaustauscher ist ein Lufterhitzer als Wärmeträgermedium/LuftErhitzer vorgesehen, der dazu geeignet ist, die Außenluft auf eine Zulufttemperatur $t_{GA}$ zu temperieren.

Die Aufgabe wird weiterhin durch die Verfahrensschritte des Anspruchs 14 gelöst.

Bei einem Verfahren wird das Wärmeträgerfluid in einem ersten Heizbetrieb durch eine Einstellung einer Heizleistung des Kältemittelkreislaufs der Wärmepumpenanlage abhängig von einem ersten Temperaturparameter auf eine Vorlauftemperatur erwärmt. Zuluft wird dabei in einem vom Wärmeträgerfluid durchströmten Lufterhitzer abhängig von einem zweiten Temperaturparameter T2 auf eine zweite Temperatur erwärmt. Dabei wird die zweite Temperatur im ersten Heizbetrieb über eine Raumsolltemperatur gebracht und damit wird wenigstens ein Raum temperiert.

Vorteilhaft wird der Raum temperiert, insbesondere beheizt oder gekühlt.

Der Pufferschichtspeicher weist vorzugsweise innen ein Verhältnis zwischen einem Durchmesser und einer Höhe DIH von weniger als 0,4, insbesondere kleiner ca. 0,2 oder kleiner 0,15 auf.

Das erste Pufferrohr und das zweite Pufferrohr weisen vorzugsweise einen Abstand auf, der mehr als 70 % einer zylindrischen Höhe einer Behälterwand, insbesondere 90 % der Behälterwand ausmacht.

Die obere Zone, in der das erste Pufferrohr liegt, weist vorzugsweise weniger als ca. 25 % des Volumens des Pufferschichtspeichers auf, insbesondere weniger als 10% oder 5 %.

Die untere Zone, in der das zweite Rohr liegt, macht vorzugsweise weniger als ca. 15 %, insbesondere weniger als ca. 10 % oder 5 % des Volumens des Pufferschichtspeichers aus.

Die primäre Vorlaufleitung ist einem Gedanken der Erfindung an ein Umschaltventil angeschlossen. Das Umschaltventil ist an eine Warmwasservorlaufleitung angeschlossen, wobei die Warmwasservorlaufleitung an einem Warmwasserwärmeaustauscher angeschlossen ist, der mit einer Wasserleitung und mit einem Warmwasserspeicher (300) verbunden ist.

An den Pufferspeicher ist über eine Fluidleitung für das Wärmeträgermedium, ein Lufterhitzter (230) angeschlossen, der an einen Zuluftkanal und einem Zuluftanschluss angeschlossen ist.

Gemäß einem Gedanken der Erfindung ist der Lufterhitzer mit einem Vorheizer verbunden. Der Lufterhitzer weist einen Außenluftanschluss auf und der Vorheizer ist mit einem Außenluftkanal mit einem Luft/Luft-Wärmeaustauscher verbunden.

Der Luft/Luft Wärmeaustauscher weist vorteilhaft einen Abluftkanal für Abluft, einen Zuluftkanal für Zuluft, einen Fortluftkanal für Fortluft auf, wobei der Luft/Luft Wärmeaustauscher vorzugsweise so ausgestattet ist, dass die Fortluft, angetrieben von einem Fortluftlüfter, im Gegenstrom zum Außenluftstrom, angetrieben von einem Zuluftventilator, strömen kann. Zur Fortluft kann vorteilhaft Außenluft für einen ausreichenden Energieinhalt beigemischt werden.

Die Außenluft strömt vorteilhaft im Gegenstrom oder Kreuzgegenstrom zur Abluft durch den Luft/Luft-Wärmeaustauscher.

Es ist gemäß einem anderen Gedanken der Erfindung auch ein Gleichstromprinzip ausführbar.

In einem Gaskühler eines Wärmeaustauschers gibt $CO_2$ als Kältemittel in einem überkritischen Zustand Wärme an ein Wärmeträgermedium ab, welches zum Lufterhitzer strömt und dort Wärme an die Zuluft abgibt, so dass die Zuluft die Temperatur $t_{GA}$ erreicht.

Im Gaskühler wird das Kältemittel dabei von einem ersten Zustand mit einer ersten Temperatur ($t_{\ddot{U}e}$), die überkritisch ist, auf einen zweiten Zustand mit einer zweiten Temperatur ($t_{\ddot{U}a}$) bei einem nahezu isobaren Druck, der vorzugsweise zwischen 73,8 bar und ca. 80 bar liegt, abgekühlt. In seiner Strömungsrichtung wird das $CO_2$ im Weiteren vor dem Verdampfer durch eine Drossel auf einen Druck unterhalb von ca. 73 bar expandiert. Gemäß einem Gedanken der Erfindung strömt das $CO_2$ in einer Strömungsrichtung zumindest teilweise entgegen der Strömungsrichtung des Wärmeträgermediums im Gaskühler und das Wärmeträgermedium strömt vorzugsweise entgegen der Zuluft im Luftvorwärmer. Das $CO_2$ kühlt sich dabei im Gaskühler vorteilhaft in einem Temperaturband zwischen ca. 90 °C und ca. 20 °C kontinuierlich ab.

Die Temperaturverläufe des sich erwärmenden Wärmeträgermediums, oder indirekt der sich erwärmenden Zuluft und des sich abkühlenden $CO_2$ schmiegen sich somit vorteilhaft ohne abrupte Temperatursprünge oder Temperaturrampen aneinander an, und eine Zunahme der Entropie und ein Verlust an Exergie sind bei der Wärmeübertragung minimiert.

Vorteilhaft wird die Drehzahl zumindest eines Verdichters des Kältemittelkreislaufs für einen kontinuierlichen Betrieb des Lüftungsheizgerätes über ein Zeitintervall von insbesondere mehr als ca. 1 h ohne Ein- und Ausschalten geregelt. Die Drehzahl des Verdichters ist dabei nicht an eine konstante Temperatur ($t_{GA}$) der Zuluft gebunden und erfolgt abhängig von einem erforderlichen Wert. Somit wird die Drehzahl insbesondere abhängig von einem Wert eines Leistungsbedarfs, eines Hochdrucks der Wärmepumpe oder einer Temperatur wie der Temperatur ($t_{AU}$) der Außenluft oder der Temperatur ($t_R$) der Raumluft geregelt.

Nach einem Gedanken der Erfindung, insbesondere bei tiefen Temperaturen ($t_{AU}$) der Außenluft unter etwa -5 °C, ist die Temperatur ($t_{GA}$) der Zuluft ein Wert, mit dem die Drehzahl des Verdichters derart geregelt wird, dass der Luft/Luft-Wärmetauscher nicht einfriert oder, sofern hierzu vorteilhaft eine höhere Leistung und/oder Drehzahl des Verdichters benötigt wird, wird die Temperatur ($t_{AU}$) der Außenluft hinter dem Vorheizer auf eine Temperatur ($t_{AU}$) von mindestens -5 °C - +3 °C gebracht.

Gemäß einem vorteilhaften Gedanken wird eine Abtauphase des Verdampfers nach Erkennung einer unzulässig starken Vereisung des Verdampfers eingeleitet. Vorteilhaft erfolgt eine Heißgasbypass-Abtauung, wobei der Gaskühler umgangen wird. Beim Abtauen wird dann kein Kältemittel durch den Gaskühler geführt, wodurch eine Abkühlung des Wärmeträgermediums und darüber eine Abkühlung der Zuluft beim Abtauen vermieden ist.

Die Lüftung durch den Luft/Luft-Wärmeübertrager erfolgt beim Abtauen vorteilhaft weiter, insbesondere mit einem kleineren Luftvolumenstrom als im Heizbetrieb. Vorteilhaft wird zumindest ein Zuluftventilator oder ein Ventilator, der Außenluft durch den Luft/Luft-Wärmetauscher bläst, gedrosselt oder angehalten. Soweit ausreichend Wärme in einem Pufferspeicher enthalten ist, in dem das Wärmeträgermedium gespeichert werden kann, erfolgt vorteilhaft keine Reduzierung des Luftvolumenstroms oder eine definierte Reduzierung des Luftvolumenstroms in Abhängigkeit des verfügbaren Wärmeinhalts des Pufferspeichers oder abhängig von der Temperatur des Wärmeträgermediums.

Vorteilhaft ist es weiterhin, insbesondere in einem Zeitraum von ca. 5 Minuten und ca. einer Stunde vor einer Warmwasserbereitung, bei der das Kältemittel durch einen Gaskühler zu einer Warmwasserbereitung, bei der das Wärmeträgermedium durch einen Warmwasser-wärmeaustauscher für Warmwasser geleitet ist, eine zeitweise Anhebung der Temperatur ($t_{GA}$) der Zuluft über einen berechneten Solltemperaturwert ($t_{GAsoll}$) der Zuluft oder der Raumtemperatur ($t_{Rsoll}$) um etwa 0,1 - 1,5 °C, insbesondere ca. 0,5 °C, hinaus erfolgt. Dadurch wird ein Gebäude vor der Warmwasserbereitung überheizt und kann sich während der Warmwasserbereitung, insbesondere wenn der Luftstrom der Außenluft gestoppt oder gedrosselt ist, etwa auf die gewünschte Raumtemperatur ($t_R$) wieder abkühlen.

Während der Warmwasserbereitung wird vorteilhaft nur so viel Wärme an die Außenluft oder Zuluft abgegeben wie im Pufferspeicher verfügbar ist oder es wird vorteilhaft sehr wenig oder gar keine Wärme an die Zuluft abgegeben, wenn der Speicher leer ist.

Gemäß einem anderen Gedanken der Erfindung wird auch bei der Warmwasserbereitung im Nachgang eine Kältemittelunterkühlung durchgeführt. Das Wärmeträgermedium wird erst dem Warmwasserwärmeaustauscher zugeführt und strömt danach in einen Puffer oder einen Lufterhitzer oder Luftvorwärmer, wodurch das Wärmeträgermedium derart stark abgekühlt wird, dass es das Kältemittel im Gaskühler nicht nur kondensiert, sondern auch unter den Kondensationspunkt weiter unterkühlt.

Im Falle der Warmwasserbereitung ist es vorteilhaft, den Luftvolumenstrom der Zuluft zu drosseln, damit weniger Energie für die Eisfreihaltung benötigt wird und mehr Energie für die Warmwasserbereitung bereitsteht. Die Außenluft wird vorteilhaft auf eine Temperatur von -5 bis +3 °C erwärmt.

Ein Gaskühler des Kältemittelkreislaufs ist vorteilhaft in einem Wärmeträgerkreislauf angeordnet und der Wärmeträgerkreislauf ist auch mit dem Zuluftkanal zumindest wärmetechnisch verbunden. Der Luftvorwärmer ist in Luftströmungsrichtung einer Zuluft hinter dem Luft/Luft-Wärmetauscher angeordnet.

Vorteilhaft ist in einem anderen Ausführungsbeispiel ein Lüftungsheizgerät mit einem Luft/Luft-Wärmeübertrager zur Übertragung von Wärmeenergie aus einem Abluftstrom aus zu beheizenden Räumen auf einen Außenluftstrom vorgeschlagen. In einer Wärmepumpe ist in einem Kältemittelkreislauf ein Verdampfer angeordnet. Der Verdampfer ist mit einem Fortluftstrom aus einem Fortluftkanal beaufschlagbar. Weiterhin ist vorteilhaft eine Öffnung für Außenluft vor dem Verdampfer vorgesehen, durch die die Außenluft in die Fortluft für einen ausreichenden Energieinhalt als Wärmequelle beigemischt werden kann. Die Außenluft wird vorteilhaft nach einem Venturi-Prinzip in die mit einer Geschwindigkeit strömende Fortluft angesaugt oder auch mittels eines Ventilators der Fortluft beigemengt.

Der Anteil der Außenluft beträgt vorteilhaft etwa das 0- bis 10-fache des Volumenstroms der Fortluft, bei einer Außentemperatur von ca. 10 °C vorteilhaft etwa das 0,5-fache, bei 0 °C etwa das 0,8-fache und bei -10 °C etwa das 1-fache der Fortluft.

Im Kältemittelkreislauf ist $CO_2$ als Kältemittel eingefüllt, und Wärme wird im Heizbetrieb vom überkritischen $CO_2$ als Kältemittel auf das Wärmeträgermedium und vom Wärmeträgermedium auf die Zuluft vorteilhaft vor und hinter dem Luft/Luft-Wärmetauscher übertragen.

Gemäß einem Gedanken der Erfindung ist das Lüftungsheizgerät dadurch gekennzeichnet, dass ein Kältemittelunterkühler in Strömungsrichtung hinter dem Gaskühler und vor der Drossel angeordnet ist. Der Kältemittelunterkühler ist in Strömungsrichtung der Außenluft vor dem Luft/Luft-Wärmeübertrager angeordnet, und durch Abgabe von Enthalpie wird das überkritische $CO_2$ unterkühlt, und ein Einfrieren des Luft/Luft-Wärmetauschers ist verhindert.

Vorteilhaft wird im Kältemittelunterkühler eine Enthalpie von ca. 0 bis 50 kJ/kg vom Kältemittel an die Außenluft oder das Wärmeträgermedium abgegeben. Die Luft oder das Wärmeträgermedium erwärmt sich dabei auf bis zu ca. -5 bis +3 °C. Dabei kann die Außenluft durchaus Temperaturen von bis zu unter -20 °C aufweisen, so dass dabei ein Temperaturhub von bis zu 15 K oder mehr erfolgt.

Gemäß einem vorteilhaften Gedanken der Erfindung ist ein Gebäude mit einem entsprechenden Luftheizgerät und einem an das Luftheizgerät angeschlossenes Luftverteilsystem ausgestattet und mit Luft beheizt. Das Gebäude weist einen spezifischen Wert des Wärmebedarfs $Q_a$ von weniger als 20 kWh/m$^2$ pro Jahr auf. Das Lüftungsheizgerät des Gebäudes weist eine thermische Leistung auf, die sich aus der Multiplikation der Wohnfläche mw des zu beheizenden Gebäudes in Quadratmetern [m$^2$] mit dem spezifischen Wert des Wärmebedarfs geteilt durch einen Korrekturwert K ergibt. Der Korrekturwert K liegt vorteilhaft zwischen 500/a und 3000/a, insbesondere zwischen 1000/a und 2000/a und besonders vorteilhaft zwischen 1200/a und 1500/a. Das Ergebnis wird noch durch 1000 geteilt wodurch sich etwa die Heizleistung des Lüftungsheizgerätes in Watt ergibt. Der Korrekturwert ist weiterhin vorteilhaft abhängig von der Personenanzahl oder dem Warmwasserverbrauch des Gebäudes.

Somit wird bei einem Gebäude mit 200 m$^2$ Wohnfläche und einem spezifischen Wärmebedarf von 10 kWhla und bei einem Normpunkt von -15 °C Außentemperatur die Heizleistung des Luftheizgerätes wie folgt ermittelt:

$$200 \text{ m}^2 * 10 \text{ kWh/m}^2\text{a} = 2000 \text{ kWh/a}$$

Der Jahreswärmebedarf beträgt somit 2000 kWh/a. Dieser Wert wird durch einen Korrekturfaktor K=1400/a dividiert und durch 1000 dividiert:

$$2000 \text{ kWh/a} / 1400/\text{a} / 1000 = 1429 \text{ W}$$

Somit ergibt sich eine Heizleistung des Lüftungsheizgerätes von wenigstens 1429 W, die über Zuluft in das Gebäude geführt wird.

In der Regel sind Heizlüftungsgeräte mit stufigen Heizleistungen verfügbar. Seitens des Geräteherstellers wird ein Gerät in das Gebäude verbaut, welches vorteilhaft mindestens die erforderliche Heizleistung aufweist.

Der Heizbetrieb erfolgt primär über den Lufterhitzer, der vorzugsweise kontinuierlich aus dem Pufferspeicher mit dem Wärmeträgermedium (Sole) versorgt wird. Die zuzuführende Wärmemenge entspricht dabei der über den erwärmten Luftstrom abgeführten Energie, die dem Raum zugeführt wird. Der Volumenstrom der Pufferpumpe wird dabei vorzugsweise geregelt. Eine Vorsteuerkennlinie für die zugeführte Wärmemenge wird vorzugsweise einem Leistungswert der abgeführten Leistung durch den Luftstrom bzw. der Lufttemperatur nach dem Gegenstrom-Wärmetauscher abgeleitet.

Die Temperatur des Wärmeträgermediums im Pufferspeicher entspricht vorzugsweise einer Ziel-Vorlauf-Temperatur des Lufterhitzers.

Eine Resttemperatur des Pufferspeichers dient vorzugsweise zur Überprüfung einer Restladung des Puffers von vorzugsweise etwa 5 %. Unterschreitet die Resttemperatur die Temperatur im Pufferspeicher um einen Pufferwert, dann wird die Pufferladung vorzugsweise gestartet. Der Volumenstrom der Ladepumpe wird dabei vorzugsweise geregelt, insbesondere vom Regler, wobei die Vorsteuerkennlinie vorzugsweise von der angeforderten Leistung und einer Rücklauftemperatur abgeleitet wird.

Der Temperatursollwert, insbesondere die Vorlauftemperatur tv, für die Pufferladung ergibt sich damit vorzugsweise aus einer Raumsolltemperatur und der Außentemperatur, die über Heizkurve des Reglers für das Heizregister vorgegeben wird. Sie wird vorzugsweise durch eine maximale Vorlauftemperatur begrenzt.

Durch asymmetrische Schaltschwellen beim Beladen des Pufferspeichers kann es unter bestimmten Übergangsumständen (Tag/Nacht-Betrieb) zu einer Situation kommen, in der Ein- und Aus-Schaltbedingungen gleichzeitig gültig sind, z.B. wenn der Pufferspeicher für einen Absenkbetrieb gerade auf 40 °C aufgeladen wurde. Nun folgt vorzugsweise die Aktivierung des Tag-Betriebs mit einer Sollaufladung von 45 °C. Die Differenz zur neuen Solltemperatur von 5 K würde die Einschaltbedingung erfüllen, die Rücklauftemperatur würde aber auch nach einer vorteilhaften Mindestlaufzeit die Abschaltbedingung erfüllen. Vorzugsweise wird Abhilfe dadurch geschaffen, dass bei einer Absenkung der Solltemperatur diese sofort gültig werden kann und/oder bei einer Anhebung erst mit dem nächsten Aufheizvorgang.

Nach dem Start der Pufferspeicher-Ladung repräsentieren die Temperaturen im Rücklauf nicht immer den Systemzustand. Diese lassen sich vorteilhaft erst nach der Umschaltung des PufferBypass-Ventils ermitteln, und vorteilhaft auch erst nachdem ein Volumen von Wärmetragermedium über den Bypass ausgetauscht wurde, oder eine Zeit vergangen ist.

Da es im unteren Teil des Pufferspeichers gemäß einem Gedanken der Erfindung keinen Temperaturfühler gibt, wird hierfür ein Wert zurückgerechnet. Der Volumenstrom der Ladepumpe und der Pufferpumpe sind bekannt. Die Differenz ergibt den Lade-Volumenstrom des Puffers.

Die Leistung kann bei einem voll aufgesteuerten Vorheizregisters nicht ausreichend für den Einfrierschutz des Wärmetauschers sein, insbesondere bei sehr niedrigen Temperaturen im Frostbreich deutlich unter 0 °C. Vorzugsweise wird dann die ZULUFT stufenweise oder kontinuierlich bis zu einem minimalen Volumenstrom reduziert.

Der WW-Speicher wird schichtend geladen. Hierzu ist vorzugsweise ein außenliegender Plattenwärmetauscher verbaut. Die Volumenströme der Ladepumpe und/oder der Umwälzpumpe werden dabei geregelt. Die Vorsteuerkennlinie für die Warmwasserbereitung wird vorzugsweise von der angeforderten Leistung des Kältemittelkreislaufs und einer Warmwasserrücklauftemperatur abgeleitet.

Im Rahmen eines mit dem Regler vorzugsweise verbundenen Energiemanagementsystems wird in Kombination mit dem Schichtspeicher und einem im oder am Schichtspeicher befindlichen Integraltemperaturfühler eine Menge Warmwasser in den Pufferspeicher oder den Warmwasserspeicher geladen, insbesondere solange wie Sonnenenergie zur Verfügung steht.

Vorzugsweise wird über ein Smart Profil genauestens eingestellt, wann wie viel Wasser zur Verfügung steht. Vorzugsweise ist über ein mit einer Fotovoltaikanlage verbundenes Energiemanagementsystem einstellbar, dass die intern in der Wärmepumpenanlage vorhandene Regelung eine Warmwasserbereitung startet, wenn genügend Strom aus der Fotovoltaikanlage hierfür zur Verfügung steht.

Zudem kann vorzugsweise bei invertergesteuerten Maschinen über eine interne Regelung die Drehzahl des Verdichters entsprechend der zur Verfügung stehenden Energie aus der Fotovoltaikanlage angepasst werden.

Der Regler der Wärmepumpe steuert die Warmwasserbereitung vorzugsweise in dem Warmwasserschichtspeicher, indem der an dem Warmwasserschichtspeicher angebundene Integralsensor die aktuelle Speichertemperatur erfasst.

Der Integralsensor ist vorzugsweise als ein langer Widerstandsdraht aufgebaut, welcher an der Mantelaußenfläche des Schichtspeichers direkt befestigt ist oder in einem direkt an der Mantelaußenfläche des Schichtspeichers befestigten Fühlerrohr eingeschoben ist oder sich in einem im Warmwasserschichtspeicher befindlichen Schutzrohr befindet.

Über den Regler kann sich ein Nutzer mehrere Profile anlegen, womit festgelegt ist, zu welcher Uhrzeit er welche Warmwassermenge zur Verfügung hat.

Die verschiedenen Profile sind vorzugsweise in einem Menü für den Nutzer einstellbar. Hierbei kann bspw. um 7:00 Uhr morgens die Mischwassermenge, die vorzugsweise auf 40 °C mit 100 l voreigestellt ist, auf eine nutzerspezifische Menge eingestellt werden.

Durch den Vorteil des vorhandenen Schichtspeichers und des angebundenen Integralsensors kann die Wärmepumpe diese Menge von Warmwasser an einer Zapfstelle zur Verfügung stellen. Die Temperaturen im Warmwasserspeicher variieren vorzugsweise zwischen 50 °C und 70 °C.

Ebenso kann vorzugsweise eine Mindestmenge von Mischwasser bei einer Warmwassertemperatur eingestellt werden, die zur Verfügung steht.

Zu Beginn einer Ladung des Warmwasserspeichers oder des Pufferspeichers wird vorteilhaft das Wärmeträgermedium am Pufferspeicher vorbei über einen Bypass geleitet. Dies erfolgt in einem vorteilhaften Verfahrensschritt über einen vorgegebenen Zeitraum nach dem Start der Ladung oder durch Messung und Vergleich der Vorlauftemperatur $t_M$ des Wärmeträgermediums mit einer Temperatur des im Pufferspeicher befindlichen Wärmeträgermediums. Damit wird vorteilhaft vermieden, dass die Schichtung des mit einer Vorlauf-temperatur $t_M$ im Pufferspeicher befindlichen Wärmeträgermediums gestört wird.

Das Wärmeträgermedium, welches sich insbesondere in einer primären Vorlaufleitung befindet und noch nicht die Temperatur des Wärmeträgermediums im Pufferspeicher aufweist, wird somit nicht in den Pufferspeicher eingeleitet, sondern am Pufferspeicher vorbei geführt. Dies erfolgt vorteilhaft über den vorgegebenen Zeitraum, der in Versuchen ermittelt und berechnet ist oder sich aus Temperaturparametern ergibt.

So kann der Zeitraum vorteilhaft vorgegeben sein, nach dem vorausgesetzt ist, dass die Leistung des Kältemittelkreislaufs soweit hochgefahren ist, nachdem dieser in Betrieb gegangen ist und das Wärmeträgermedium die vorgegebene Vorlauftemperatur des Wärmeträgermediums erreicht hat.

Weiterhin ist es von Vorteil, dass in dem Zeitraum das in der primären Vorlaufleitung stehende Wasser an dem Pufferspeicher und durch den Bypass vorbei geleitet ist und wieder dem Gaskühler zugeführt ist.

In einem anderen vorteilhaften Verfahren wird das Wärmeträgermedium so lange über den Bypass am Pufferspeicher vorbei geleitet bis es einen vorgegebenen Temperaturwert des Wärmeträgermediums in der primären Vorlaufleitung erreicht hat oder wenn eine Temperaturdifferenz zwischen der Temperatur des Wärmeträgermediums in der primären Vorlaufleitung und der Temperatur des sich im Pufferspeicher befindlichen Wärmeträgermediums annähert, ähnlich ist oder gleich oder größer ist.

Soweit vorteilhaft die Kriterien dafür erfüllt sind, dass das Wärmeträgermedium warm genug ist, bzw. eine vorgegebene Vorlauftemperatur tv des Wärmeträgermediums erreicht hat, oder eine Zeit abgelaufen ist, wird insbesondere ein Dreiwegeventil geöffnet und das Wärmeträgermedium fließt mit der vorgegebenen Vorlauftemperatur in den Pufferspeicher.

Bei der Warmwasserbereitung wird gemäß einem vorteilhaften Verfahrensschritt die Umwälzpumpe eingeschaltet, wenn zu erwärmendes Trinkwasser im Warmwasserwärmeaustauscher eine entsprechende Temperatur erreicht, sodass Trinkwasser vorzugsweise mit einer ersten Trinkwassertemperatur in den Warmwasserspeicher schichtend abgegeben werden kann, die gleich oder größer als eine zweite Warmwassertemperatur des im Wasserspeicher befindlichen Trinkwassers, ist

Weitere vorteilhafte Ausgestaltungen werden nachfolgend anhand von Ausführungsbeispielen der Erfindung unter Bezugnahme auf die Abbildungen näher beschrieben.

Figur 1 zeigt eine Wärmepumpenanlage aus zwei Modulen.

Figur 2 zeigt eine Wärmepumpenanlage aus zwei Modulen mit einem Regler und insbesondere Temperatursensoren.

Figur 3 zeigt eine Erwärmungskurve von Luft ausgehend von tiefen Frost

Figur 4 zeigt eine Erwärmungskurve von Außenluft bei leichten Plusgraden

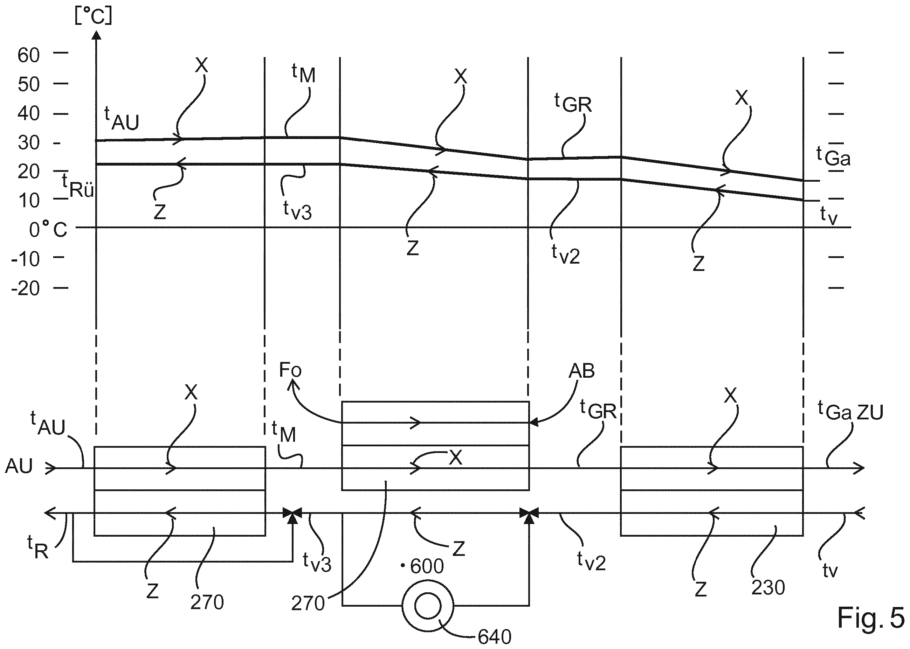

Figur 5 zeigt eine Abkühlungskurve von Außenluft

Figur 6 zeigt eine über einen Wärmetauscher gekoppelten Heizkreis

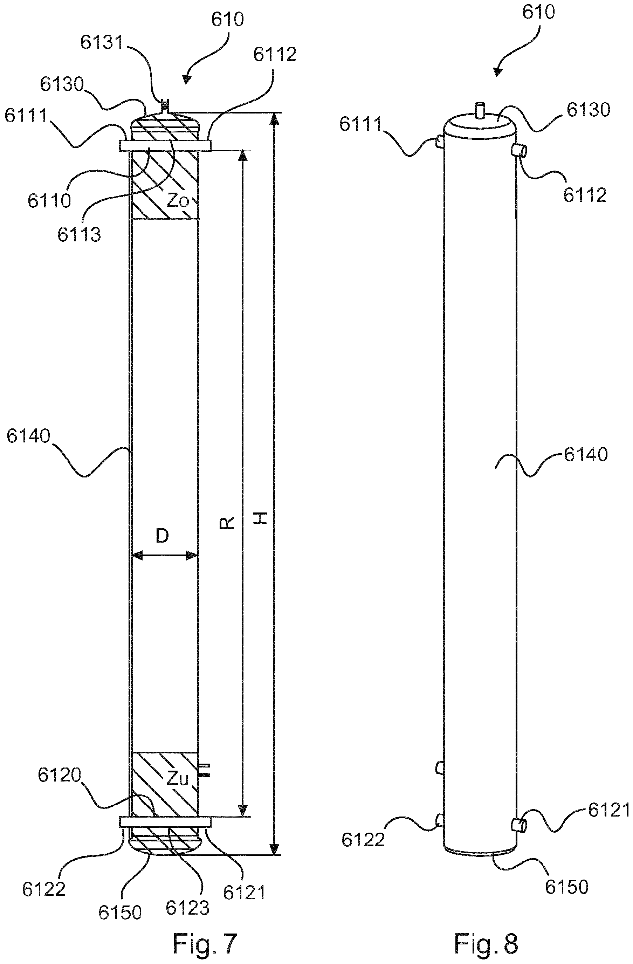

Figur 7 zeigt einen Pufferspeicher im Schnitt

Figur 8 zeigt einen Pufferspeicher von außen

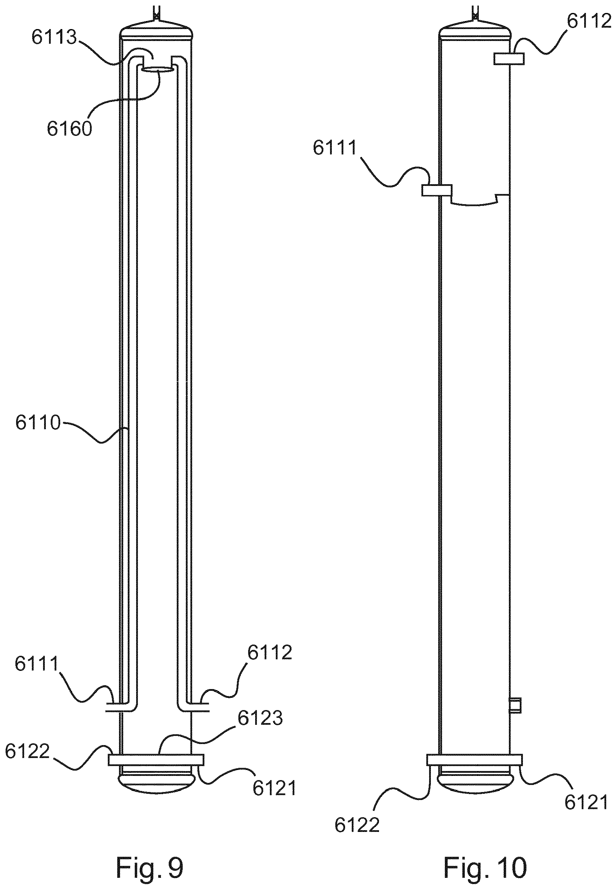

Figur 9 zeigt einen Pufferspeicher im Schnitt mit versetzten Anschlüssen

Figur 10 zeigt einen Pufferspeicher im Schnitt mit versetzten Anschlüssen

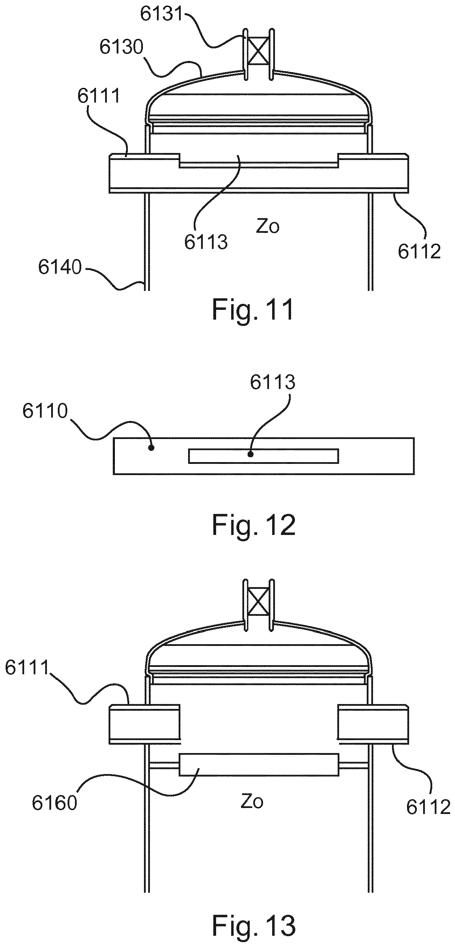

Figur 11 zeigt einen Pufferspeicher mit einem geschlitzten Rohr

Figur 12 zeigt ein geschlitztes Pufferrohr von oben

Figur 13 zeigt einen Pufferspeicher mit einem Strömungsschutz

Die vorgeschlagene Wärmepumpenanlage 1 ist eine Kombination aus einem Wärmeerzeuger zur Heizung, zur Kühlung und einer Lüftungsanlage zur Temperierung von Räumen und/oder Gebäuden. Die Wärmepumpenanlage 1 enthält einen Kältemittelkreislauf 100, einen Luft/Luft-Wärmeübertrager 200, einen Warmwasserbehälter 300 und einen Pufferspeicher 610. In einem Ladekreislauf 700 kann über ein Dreiwegeventil 710 eine Warmwasserbereitung oder eine Heizung/Kühlung von Räumen erfolgen.

Insbesondere eine Solaranlage 400 und/oder ein Elektroheizer 500 sind an die Wärmepumpenanlage 1 anschließbar bzw. integrierbar.

Die Wärmepumpenanlage 1 ist im Ausführungsbeispiel aus zwei Einheiten zusammensetzbar, aus einem Heizungsmodul 2 und einem Speichermodul 3. Die Module 2, 3 werden in einem Gebäude/Raum zusammengebaut und bilden die Wärmepumpenanlage 1, zur Heizung zur Warmwasserbereitung und zur Lüftung, optional auch zum Kühlen.

Die Wärmepumpenanlage 1 weist einen Kältemittelkreislauf 100 mit einem Verdichter 110, einem Dreiwegeventil, einem Gaskühler, einem Kältemittelunterkühler, einer Drossel 150 und einem Verdampfer 160 auf.

Weiterhin ist vorteilhaft ein Gaskühler 170 vorgesehen, der einen Wärmeaustauscher 171 für einen Wärmeaustausch zwischen einem Kältemittel des Kältemittelkreislaufs 100 und einem Wärmeträgermedium eines Ladekreises 700 aufweist. Dem Verdampfer 160 ist eine Öffnung 161 zugeordnet, über die der Verdampfer 160 mit einer Außenluft verbunden ist.

Weiterhin weist der Kältemittelkreislauf 100 Leitungen 180, 184 und 185 auf.

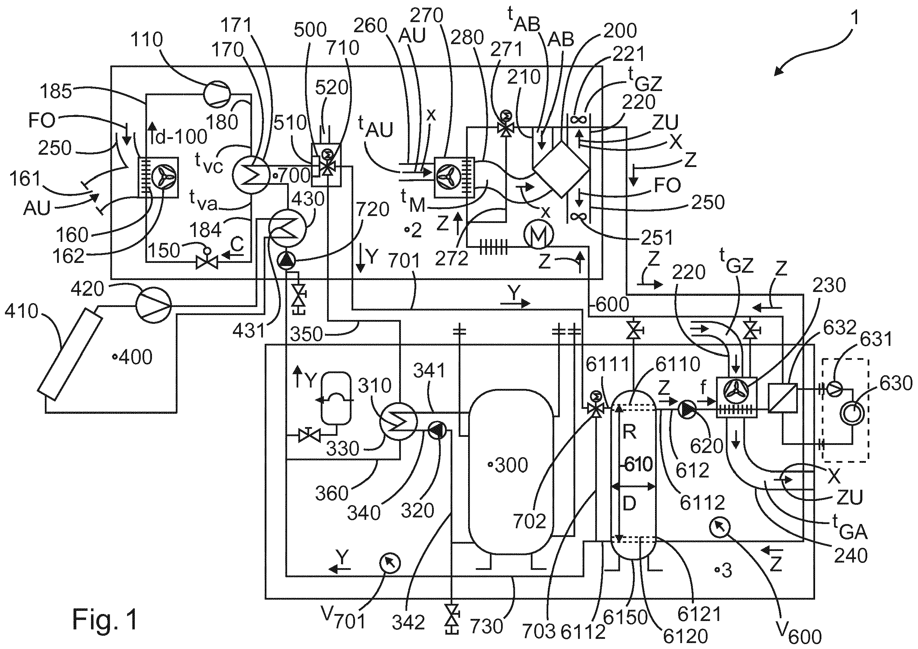

In Figur 1 ist weiterhin ein Luft/Luft-Wärmeübertrager 200 in der Wärmepumpenanlage 1 eingebunden. Der Luft/Luft-Wärmeübertrager 200 ist an einen Abluftkanal 210, einen Zuluftkanal 220, einen Fortluftkanal 250 und einen Außenluftkanal 280 angeschlossen. Im Zuluftkanal 220 ist vorzugsweise ein Zuluftventilator 221 angeordnet. Ein Fortluftlüfter 251 ist vorzugsweise im Fortluftkanal 250 angeordnet.

Außenluft AU wird dem Luft/Luft-Wärmeübertrager 200 über einen Vorheizer 270 zugeführt. Im Vorheizer 270 wird die Außenluft AU vorzugsweise auf einen Mindesttemperaturwert $t_M$ erwärmt. Der Mindesttemperaturwert $t_M$ liegt in einem Ausführungsbeispiel vorzugsweise bei ca. -3° C, zumindest aber bei etwa -5 °C oder auf einem Wert zwischen -5 °C und +3 °C. Der Mindesttemperaturwert $t_M$ kann in einem anderen Ausführungsbeispiel auch von einem Luftparameter, insbesondere von der Außenluft AU abhängen. Der Mindesttemperaturwert $t_M$ kann vom Feuchtegehalt und/oder der Temperatur der Außenluft AU, vom Feuchtegehalt der dem Vorheizer 270 zugeführten Luft oder anderen Werten abhängen.

Die dem Vorheizer 270 zugeführte Luft kann Außenluft AU sein, eine Mischung aus Au-ßenluft AU und Fortluft FO oder auch nur Fortluft FO oder aus anderen Quellen stammen. Die Mindesttemperatur $t_M$ sollte vorzugsweise in einem Temperaturbereich zwischen -3 °C und 0 °C liegen und kann die beschriebene Abhängigkeit von der Temperatur der Außenluft AU und/oder von der Feuchte der dem Vorheizer 270 zugeführten Luft sein. Bei sehr niedrigen Temperaturen und einer sehr geringen Feuchte kann die Mindesttemperatur $t_M$ eher abgesenkt werden, während er bei hohen Feuchtegehalten eher anzuheben ist, z.B. auf Temperaturen über dem Gefrierpunkt, bei insbesondere 1 °C bis 3 °C. Über den Außenluftkanal 280 strömt die Luft dann weiter vom Vorheizer 270 zum Luft/Luft-Wärmeübertrager 200.

Im Luft/Luft-Wärmeübertrager 200 wird die Außenluft AU weiter durch Wärme von der durch den Luft/Luft-Wärmeübertrager 200 strömenden Abluft AB eines Raumes erwärmt. Die Abluft AB des Raumes beträgt ca. 15-25°, insbesondere ca. 20°, und erwärmt die mit vorzugsweise wenigstens der Mindesttemperatur von ca. -5 °C bis 3 °C, insbesondere -3 °C in den Luft/Luft-Wärmeübertrager 200 einströmende Außenluft AU auf Temperaturen zwischen wenigstens 1 °C bis ca. 20 °C auf. Die Außenluft AU wird im Gegenstrom vorzugsweise auf eine Temperatur angehoben die ca. 2 K bis 5 K unter der Temperatur der Abluft AB aus dem Raum liegt.

Weiter strömt die dann erwärmte Außenluft AU nach dem Luft/Luft-Wärmeübertrager 200 weiter als Zuluft ZU über den Zuluftkanal 220 zu einem Lufterhitzer 230.

Im Lufterhitzer 230 wird die Zuluft ZU auf eine zweite Temperatur $t_{GA}$ angehoben, die eine für die Beheizung des Raumes erforderliche Solltemperatur darstellt. Das durch den Lufterhitzer 230 strömende Wärmeträgermedium weist dort Temperaturen tw von vorzugsweise 30 °C - 70 °C auf, womit der Zuluftstrom ZU auf eine Temperatur von vorzugsweise unter 60 °C, insbesondere etwa kleiner/gleich 50 °C angehoben wird.

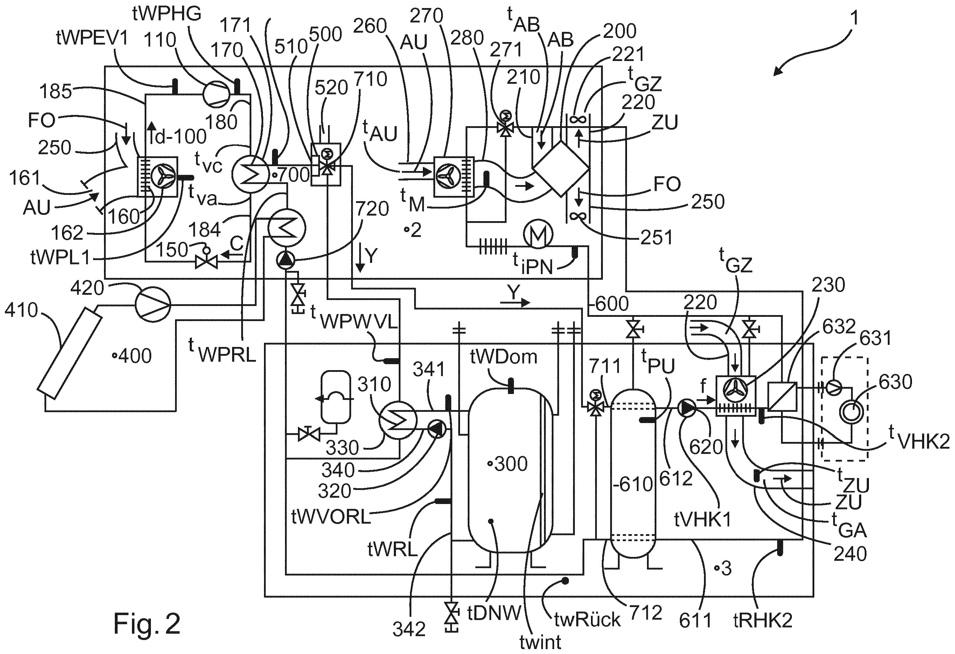

Die Solltemperatur des Zuluftstroms ZU wird abhängig von einer Außentemperatur $t_{Au}$ und/oder einer Raumtemperatur gesteuert. Entsprechend wird entweder der Massenstrom des Wärmeträgermediums durch den Lufterhitzer 230 und/oder die Temperatur tw des Wärmeträgermediums gesteuert um die zweite Temperatur $t_{GA}$ zu erreichen. Vorzugsweise ist gemäß Figur 2 ein Zulufttemperatursensor in einem Zuluftanschluss 240 vorgesehen, der die Zulufttemperatur $t_{Zu}$ erfasst. Abhängig von einem Temperatursignal der Zuluft $t_{Zu}$ und/oder der Raumtemperatur $t_R$ und/oder der Außentemperatur $t_{Au}$ wird die Temperatur des Wärmeträgermediums und/oder der Massenstrom des Wärmeträgermediums gesteuert.

Bei Außentemperaturen $t_{Au}$ der Luft im Bereich von -20 °C wird die Zuluft auf ca. 50 °C erwärmt. Bei Temperaturen von um die 0 °C erfolgt eine Erwärmung der Zuluft auf etwa 35 °C.

In einem Kühlfall, wenn das Gebäude gekühlt werden soll, wird die Zuluft ZU in der Temperatur gesenkt, auf einen Wert, der unter der Raumtemperatur $t_R$ liegt. Dies erfolgt solange, bis der Sollwert der Raumtemperatur $t_{Rs}$ erreicht wird. In vielen Kühlfällen ist es erforderlich, dass die Zulufttemperatur zu Kühlzwecken längere Zeiten, insbesondere über mehrere Stunden, bei denen die Außentemperatur insbesondere über 25 °C liegt oder ein starker Wärmeeintrag durch Sonneneinstrahlung erfolgt, unter der Solltemperatur des Raumes $t_{Rs}$ gehalten und das Wärmeträgermedium gekühlt wird. Dazu wird auch der Kältemittelkreislauf 100 derart betrieben, dass der Gaskühler 170 als Gasheizer oder Verdampfer dient, wo das Kältemittel Wärme vom Wärmeträgermedium aufnimmt und somit das Wärmeträgermedium kühlt.

Der Abluftstrom AB, der durch den Abluftkanal 210 zum Luft/Luft-Wärmeübertrager 200 strömt, wird im Heizfall durch den kühlen Außenluftstrom AU, der vorzugsweise mit ca. -3 °C bis 2 °C zum Luft/Luft-Wärmeübertrager 200 strömt, auf Temperaturen unter der Raumtemperatur abgekühlt. Je nach Außentemperatur erfolgt eine Abkühlung auf einen Temperaturwert, der ca. 2 K bis 7 K über der Außenlufttemperatur oder der Temperatur der Luft, die dem Luft/Luft-Wärmeübertrager 200 zugeführt wird, liegt. Die Abluft AB strömt somit abgekühlt als Fortluft FO aus dem Luft/Luft-Wärmeübertrager 200 aus und wird im Ausführungsbeispiel vorzugsweise durch den Fortluftlüfter 251 gefördert.

Die so geförderte Fortluft FO wird über einen Fortluftkanal 250 einem Verdampfer 160 des Kältemittelkreislaufs 100 zugeführt. Da die Fortluft FO, mit etwa 2 K bis 7 K, wärmer als die Außenluft AU ist, wird dem Verdampfer 160 durch die Fortluft FO relativ energiereiche Luft zugeführt, die vorzugsweise eine Temperatur über dem Gefrierpunkt aufweist, womit ein Einfrieren des Verdampfers 160 vermieden oder verzögert ist.

Im Stillstand des Kältemittelkreislaufs 100 kann mit der Fortluft FO der Verdampfer 160 abgetaut werden.

Im Ausführungsbeispiel weist die Wärmepumpenanlage 1 weiterhin einen Warmwasserbehälter 300 auf, der vorzugsweise über einen Warmwasserwärmeaustauscher 330 erwärmt wird. Mittels einer Umwälzpumpe 320, welche in einer Pumpenleitung 340 liegt, wird das im Warmwasserbehälter 300 befindliche Trinkwasser durch den Warmwasserwärmeaustauscher 330 gepumpt. Dabei fließt das Trinkwasser vorzugsweise durch die Wasserleitungen 341 und 342 zum Warmwasserwärmeaustauscher 330, der in einem Korpus 310 angeordnet ist.

Das Wärmeträgermedium wird mittels der Pumpe 720 zum Warmwasserwärmeaustauscher 330 gepumpt.

Das Dreiwegeventil wir vom Regler 4 zwischen Warmwasserbereitung und Pufferspeicherbeladung geschaltet. Zur Warmwasserbeladung ist das Dreiwegeventil 710 so geschaltet, dass das Wärmeträgermedium zum Warmwasserwärmetauscher 330 geleitet ist. Zur Beheizung des Pufferspeichers und/oder des Wärmeträgerkreislaufs 600 ist das Dreiwegeventil zur primären Vorlaufleitung 701 geöffnet.

In einem Ausführungsbeispiel ist eine Solaranlage 400 an die Wärmepumpenanlage 1 angeschlossen. Die Solaranlage 400 besteht aus einem Solarkollektor 41 0, einer Solarpumpe 420, einem Solarwärmeaustauscher 430 sowie einem Solarwärmeträgermediumkühler 431. Der Solarwärmeträgermediumkühler 431 ist vorzugsweise in eine Rücklaufleitung 730 eines Ladekreislauf 700 eingebunden.

Ein Elektroheizer 500 mit einem Elektroheizkörper 510 und einen Elektroanschluss 520 ist vorgesehen, um elektrischen Direktstrom in Wärme zu wandeln und diese Wärme an den Ladekreislauf 700 abgeben zu können.

Gemäß Figur 1 ist weiterhin ein Pufferspeicher 610 vorgesehen, an den ein Wärmeträgerkreislauf 600 angeschlossen ist. Eine Fluidleitung 612 führt zum Lufterhitzer 230.

Im Pufferspeicher 610 ist im Ausführungsbeispiel ein erstes Pufferrohr 6110 vorgesehen. Der Pufferspeicher 610 weist einen ersten Eintritt 6111 und einen ersten Austritt 6112 auf.

Im Ausführungsbeispiel ist das erste Pufferrohr 6110 mit einer ersten Rohröffnung 6113 ausgestattet. Die erste Rohröffnung 6113 ist nach oben zu einem oberen Klöpperboden 6130 gerichtet. Das erste Pufferrohr 6110 selbst ist gegenüber der ersten Rohröffnung 6113 vorteilhaft zumindest teilweise durchgehend, sodass ein durch das erste Pufferrohr 6110 strömendes Wärmeträgermedium mit dem im Pufferspeicher 610 befindlichen Wärmeträgermedium über die zum oberen Klöpperboden 6130 hin gerichtete erste Rohröffnung 6113 in Verbindung steht.

Damit ist eine strömungstechnische Verbindung zwischen dem ersten Eintritt 6111 und dem ersten Austritt 6112 des ersten Pufferrohrs 6110 vorgesehen. Das Wärmeträgermedium tritt somit durch den ersten Eintritt 6111 in den Pufferspeicher 610 ein und strömt im ersten Pufferrohr 6110 zur ersten Rohröffnung 6113. Soweit eine Pufferpumpe 620 läuft, wird das Wärmeträgermedium gefördert. Es strömt durch die erste Rohröffnung 6113 in den Pufferspeicher 610 und das so geförderte Wärmeträgermedium strömt weitgehend direkt durch den ersten Austritt 6112 des ersten Pufferrohres 6110 in den Wärmeträgerkreislauf 600. Je nachdem, mit welchen Förderleistungen die Pufferpumpe 620 und eine Ladepumpe 720 laufen, wird das Wärmeträgermedium teilweise oder ganz in den Pufferspeicher 610 gepumpt. Bei etwa gleichen Förderleistungen der Pumpen 620, 720 strömt das Wärmeträgermedium direkt vom ersten Eintritt 6111 zum ersten Austritt 6112 und durch die erste Rohröffnung 6113 strömt so gut wie kein Wärmeträgermedium in den Pufferspeicher 610. Soweit aber die Pufferpumpe 620 beispielsweise weniger Wärmeträgermedium fördert als die Ladepumpe 720, kommt es zu einer Strömungsaufteilung des Wärmeträgermediums zum einen in den ersten Austritt 6112 entsprechend der Förderleistung der Pufferpumpe 620 und zum anderen in den Pufferspeicher 610 selbst. Die Differenz des Massenstroms des Wärmeträgermediums, abhängig von der Förderleistung der Ladepumpe 720 und der Pufferpumpe 620, strömt durch die erste Rohröffnung 6113 in oder aus dem Pufferspeicher 610. Somit wird das Wärmeträgermedium mit der Temperatur TW des Wärmeträgermediums in den Pufferspeicher 610 befördert und dieser schichtend von oben nach unten mit dieser Temperatur Tw beladen oder auch entladen. Das Wärmeträgermedium strömt mit der Temperatur Tw in den Wärmeträgerkreislauf 600.

Der Pufferspeicher 610 weist im Ausführungsbeispiel gemäß Figur 1 ein zweites Pufferrohr 6120 auf. Der Pufferspeicher 610 ist mit einem zweiten Eintritt 6121 und einem zweiten Austritt 6122 ausgestattet. Das zweite Pufferrohr 6120 weist eine zweite Rohröffnung 6123 auf, die hin zu einem unteren Klöpperboden 6150 gerichtet ist und somit das zweite Pufferrohr 6120 zum unteren Klöpperboden 6150 hin offen ist. Gegenüber der zweiten Rohröffnung 6123 ist das zweite Pufferrohr 6120 durchgängig.

Das erste Pufferrohr 6110 und das zweite Pufferrohr 6120 sind im Ausführungsbeispiel durchgängig, haben jedoch jeweils die Rohröffnung 6113, 6123. Wesentlich ist hierbei nicht die Durchgängigkeit des Rohrs, sondern eine möglichst gute Strömung vom ersten Eintritt 6111 zum ersten Austritt 6112, die auch durch andere Maßnahmen erreicht werden kann, aber so besonders vorteilhaft ist.

So können in einem anderen Ausführungsbeispiel anstelle eines durchgehenden Pufferrohres 6110 auch zwei Rohre verwendet werden die vorzugsweise gegenüberliegend im Pufferspeicher 610 angeordnet sind und vorteilhaft einen Strömungsschutz 6160 aufweisen, der verhindert, dass durch Verwirbelungen oder Schrägströmungen die Schichtung des Wärmeträgermediums bei der Temperatur des Wärmeträgermediums Tw im Pufferspeicher 610 gestört ist.

Der Pufferspeicher 610 weist zwischen dem oberen Klöpperboden 6130 und dem unteren Klöpperboden 6150 eine Behälterwand 6140 auf. Der Pufferspeicher 610 hat dabei einen Durchmesser D und eine Höhe H. Weiterhin ist die Zylinderwand durch eine Höhe Hz der Zylinderwand 6140 definiert. Der Abstand des ersten Pufferrohrs 6110 zum zweiten Pufferrohr 6120 ist über einen Pufferrohrabstand R definiert.

Das erste Pufferrohr 6110 ist in einer oberen Zone $Z_o$ des Pufferspeichers 610 angeordnet. Das zweite Pufferrohr 6120 ist in einer unteren Zone $Z_u$ des Pufferspeichers 610 angeordnet.

Der Pufferspeicher 610 ist sehr schlank ausgebildet, d.h. das Verhältnis des Pufferspeicherdurchmessers D zur Höhe H des Pufferspeichers ist gering. Der Pufferspeicher 610 hat einen Durchmesser D von vorteilhaft ca. 15 cm - 25 cm, wobei die Höhe H vorteilhaft zwischen ca. 80 cm und 200 cm liegt, wobei das Verhältnis aus Durchmesser und Höhe DIH im Ausführungsbeispiel vorzugsweise kleiner als 0,2 ist.

Der Durchmesser D kann in anderen Ausführungsbeispielen auch noch kleiner als 15 cm sein und die Höhe H kann auch noch höher sein als 200 cm. Je nachdem, wie hoch die Höhe H ausgewählt ist, kann auch der Durchmesser D größer ausfallen. Soweit die Höhe H über 200 cm ausfällt, kann der Durchmesser D auch über 25 cm sein, wobei das Verhältnis aus Durchmesser und Höhe vorzugsweise kleiner als 0,3 oder kleiner als 0,2 bleibt.

Im Ausführungsbeispiel ist der Durchmesser D des Pufferspeichers 610 ca. 18 cm und die Höhe ca. 150 cm. Somit beträgt das Verhältnis des Pufferspeicherdurchmessers D zur Höhe H des Pufferspeichers 610 vorteilhaft etwa 0,12. Vorteilhaft werden derartige Verhältnisse des Durchmessers D zur Höhe H unter 0,4 liegen, insbesondere Verhältnisse zwischen 0,2 und 0,08, oder etwa 0,1 bis 0,14.

Vorteilhaft weist der Pufferspeicher 610 am oberen Klöpperboden 6130 einen Entlüftungsanschluss 6131 oder ein Entlüftungsventil auf.

Das erste Pufferrohr 6110 befindet sich in der oberen Zone $Z_o$, die vorteilhaft ein Volumen von weniger als 25 % des Pufferspeichers 610 ausmacht.

Der erste Eintritt 6111, der erste Austritt 6112, der zweite Eintritt 6121 und der zweite Austritt 6122 können aber auch an einem beliebigen Punkt des Pufferspeichers 610 angebracht sein, beispielsweise im oberen Klöpperboden 6130, oder im unteren Klöpperboden 6150 und/oder irgendwo in der Behälterwand 6140.

Vorteilhaft sind dann im Inneren des Pufferspeichers 610 Rohre angebracht, mit denen die Eintritte und Austritte 6111, 6112, 6121, 6122 verlängert sind, wobei die Rohre dann in einem vorgesehenen Bereich des Pufferspeichers 610 enden. So kann der erste Eintritt 6111 im unteren Klöpperboden 6150 angeordnet sein und ein Rohr im Pufferspeicher 610 bis oben in den Bereich des oberen Klöpperbodens 6130 geführt sein, wo dann das Wärmeträgermedium in den inneren Raum des Pufferspeichers 610 eintreten kann. Physikalisch kommt dies einer Anordnung nahe, bei der der erste Eintritt 6111 an einer entsprechenden Stelle im oberen Klöpperboden 6130 angebracht ist.

Der Pufferrohrabstand R ist vorteilhaft möglichst groß. Aus fertigungstechnischen Gründen hat es sich als vorteilhaft erwiesen, dass das erste Pufferrohr 6110 und das zweite Pufferrohr 6120 in der Behälterwand 6140 angeordnet sind, und dabei einen möglichst großen Pufferrohrabstand R haben. Vorteilhaft, wie im Ausführungsbeispiel gezeigt, liegt das erste Pufferrohr 6110 nahe des oberen Klöpperbodens 6130, ist aber noch in der Behälterwand 6140 angeordnet und auch das zweite Pufferrohr 6120 ist in der Nähe des unteren Klöpperbodens 6150, aber noch in der Behälterwand 6140 angeordnet.

Auch eine Anordnung des ersten Pufferrohrs 6110 und des zweiten Pufferrohrs 6120 in einem Klöpperboden 6130, 6150 kann vorteilhaft sein, insbesondere aus fertigungstechnischen Gedanken. So brauchen in einem vorteilhaften Ausführungsbeispiel jeweils nur gleiche Klöpperböden 6130, 6150 mit einem Pufferrohr 6110, 6120 gefertigt werden, die dann unten und oben jeweils auf die Behälterwand 6140 gesetzt werden.

Im Wärmeträgerkreislauf 600 ist die Pufferpumpe 620 vorgesehen, die das Wärmeträgermedium zunächst zum Lufterhitzter 230 und danach zu einem Heizkreiswärmeübertrager 632 umtreibt. Der Heizkreiswärmeübertrager 632 ist Bestandteil eines Heizkreises 630. Der Heizkreis 630 ist von einem flüssigen Wärmeträgermedium durchflossen, angetrieben von einer Heizkreispumpe 631. Hiermit können eine Fußbodenheizung und/oder auch Radiatoren mit Wärme/Kälte versorgt werden.

Im Bereich der Wasserhydraulik des Pufferspeichers 610 ist ein Pufferbypass 703 vorgesehen, der von einer primären Vorlaufleitung 701 mittels eines Bypassdreiwegeventils 702 abgezweigt wird.

Am Vorheizer 270 vorbei ist vorteilhaft ein Bypass 272 vorgesehen, der über ein Bypass Dreiwegeventil 271 geöffnet oder geschlossen werden kann.

Bei einem vorteilhaften Verfahrensschritt ist der Bypass 272 vom Wärmeträgermedium durchflossen, wenn die Außenluft AU bereits einen Mindesttemperaturwert $t_M$ aufweist. Somit wird je nach Außentemperatur $t_{Au}$ der Vorheizer 270 von Wärmeträgermedium durchflossen oder nicht. Soweit die Außentemperatur $t_{Au}$ kleiner ist als der Temperatur Mindestwert $t_M$ wird der Bypass 272 mit dem Dreiwegeventil 271 verschlossen und das Wärmeträgermedium strömt durch den Vorheizer 270, um die Außenluft AU auf die Mindesttemperatur $t_{Au}$ zu bringen.

Ein Pufferspeicher 610 für eine Wärmepumpenanlage 1, mit einem Volumen zur Aufnahme eines Wärmeträgermediums, weist eine Höhe H, einen Durchmesser D auf und wenigstens einen Eintritt 6111, 6121 und wenigstens einen Austritt 6112, 6922, Der Pufferspeicher 610 hat innen ein Verhältnis zwischen dem Durchmesser D und einer Höhe H von weniger als 0,4, insbesondere kleiner als ca. 0,2,

Die Behälterwand 6140 ist zwischen dem oberen Klöpperboden 6130 und dem unteren Klöpperboden 6150 angeordnet, wobei das obere Pufferrohr 6110 unterhalb des oberen Klöpperbodens 6130 durch die Behälterwand 6140 geführt ist und das untere Pufferrohr 6120 oberhalb des unteren Klöpperbodens 6150 durch die Behälterwand 6140 geführt ist.

Vorteilhaft weist wenigstens ein Pufferrohr 6110, 6120 eine Öffnung 6113, 6123 auf und ist zu einem Klöpperboden 6130, 6150 hingerichtet.

Bei einem Verfahren zum Betrieb einer Wärmepumpenanlage wird vorteilhaft die Vorlauf-temperatur von einem Regler durch Einstellung einer Wärmeträgerleistung des strömenden Wärmeträgerfluids vorgegeben, wobei die Wärmeträgerleistung abhängig von der Vorlauftemperatur und einer vom Regler vorgegeben Pumpenleistung einer Pumpe und/oder Heizleistung des Kältemittelkreislaufs ist.

Die Heizleistung des Kältemittelkreislaufs wird vorteilhaft durch eine vom Regler ermittelte Drehzahl für den Verdichter, insbesondere abhängig vom ersten Temperaturparameter T1, vorgegeben.

Gemäß einem weiteren Gedanken der Erfindung wird in einem vorteilhaften Verfahrensschritt die zweite Temperatur $t_{GA}$ der Zuluft (ZU) vom Regler 4 abhängig von einer Differenz aus einer ermittelten Vorlauftemperatur tv mit einer Auslauftemperatur $t_{al}$ des Wärmeträgerfluids aus dem Lufterhitzer 230, einer Eintrittstemperatur $t_{Ge}$ in den Lufterhitzer und abhängig von einem Luftvolumenstrom der Zuluft (ZU) bestimmt wird, womit vom Regler insbesondere die Pumpenleistung 620 geregelt wird.

Bei einem vorteilhaften Verfahrensschritt wird der erste Temperaturparameter T1 und/oder der zweite Temperaturparameter T2, abhängig von einem prozentualen Anteil $P_a$ einer Außentemperatur $t_a$ und/oder abhängig von einem prozentualen Anteil $P_R$ der Raumtemperatur $t_R$, ermittelt.

Gemäß einem weiteren Gedanken der Erfindung ist der Temperaturparameter T2 abhängig vom Temperaturparameter T1, wobei der Temperaturparameter T1 insbesondere von einer vorgegebenen Heizkurve bestimmt ist.

In einem vorteilhaften Verfahrensschritt wird die Pumpendrehzahl der Ladepumpe 720 und/oder die Leistung des Kältemittelkreislaufs so eingestellt, dass das Wärmeträgermedium die Vorlauftemperatur tv erreicht, wobei die Wärmeleistung insbesondere im Zusammenspiel der Pumpenleistung der Pumpe 720, 620 mit der Heizleistung des Kältemittelkreislaufs vom Regler 4 vorgegeben wird.

Gemäß einem vorteilhaften Verfahrensschritt wird Außenluft AU im ersten Heizbetrieb, bei Temperaturen der Außenluft unter dem Gefrierpunkt, mit einem Vorheizer durch Wärmeaustausch mit dem Wärmeträgerfluid auf eine Mindesttemperatur $t_M$ gebracht. Die vorerwärmte Außenluft wird nach dem Vorheizer mit der Mindesttemperatur $t_M$ einem Luft/Luft-Wärmeaustauscher zugeführt. Ein gemessener Mindesttemperaturwert $t_{Mm}$, der in Strömungsrichtung hinter dem Vorheizer 270 in der strömenden Außenluft AU gemessen wird, wird dem Regler zugeführt. Der Vorheizer wird vorteilhaft abhängig von der Außentemperatur $t_A$ aktiviert und abhängig von der gemessenen Mindesttemperatur $t_{Mm}$ wird eine Wärmeleistung eingestellt.

Der Luftvolumenstrom der Außenluft wird vorteilhaft reduziert, wenn mit dem Vorheizer trotz voller Heizleistung die Mindesttemperatur $t_M$ der zugeführten Außenluft nicht auf die Mindesttemperatur $t_M$ gebracht werden kann.

Die Außenluft wird dem Luft/Luft-Wärmeaustauscher vorteilhaft nach dem Vorheizer mit einer Mindesttemperatur von wenigstens zwischen -5 °C und +3 °C, insbesondere ca. 1 °C zugeführt, wobei die Außenluft durch Austausch mit Wärmeenergie einer Abluft im Luft/Luft-Wärmeaustauscher auf eine Temperatur zwischen ca. 12 °C bis 25 °C weiter angehoben wird.

Gemäß einem Gedanken der Erfindung wird die Außenluft, mit Temperaturen zwischen 12 °C bis 25 °C, in Strömungsrichtung der Außenluft AU nach dem Luft/Luft-Wärmeaustauscher einem Lufterhitzter zugeführt, wobei die Außenluft im Lufterhitzter abhängig vom zweiten Temperaturparameter T2 auf eine Temperatur zwischen 25 °C und 60 °C erhitzt wird, die im ersten Heizfall zumindest über der Raumtemperatur $t_R$ liegt, insbesondere auf Temperaturen zwischen 30 °C und 50 °C entsprechend einer vorzugsweise linearen Abhängigkeit vom zweiten Temperaturparameter T2.

Das Wärmeträgerfluid wird vorteilhaft zunächst in einem Gaskühler auf die Vorlauftemperatur tv gebracht und dann einem Pufferspeicher mit einem Formfaktor vom Durchmesser zur Höhe, DIH, von kleiner 0,25, insbesondere kleiner 0,18 zugeführt.

Vorteilhaft wird das Wärmeträgerfluid in ein oberes Pufferrohr eines Pufferschichtspeichers gepumpt, wobei das Wärmeträgerfluid mit der Vorlauftemperatur über eine obere Öffnung mit einer oberen Zone Zo verbunden ist, so dass das Wärmeträgerfluid in die obere Zone Zo des Pufferschichtspeicher einströmt.

In einem vorteilhaften Verfahrensschritt wird der Pufferschichtspeicher von der oberen Zone Zo nach unten geschichtet, mit dem Wärmeträgerfluid mit der Vorlauftemperatur $t_M$ beladen und ein Volumen des sich mit der Vorlauftemperatur im Pufferschichtspeicher befindlichen Wärmeträgermedium wird mit der Vorlauftemperatur tv auf einen vorgegebenen Ladungsgrad angepasst.

Der Pufferschichtspeicher wird vorteilhaft schichtend mit einem ersten Massenstrom aus einer primären Vorlaufleitung geladen, wobei ein zweiter Massenstrom über einen oberen Austritt in eine Fluidleitung zu einem Wärmeträgerkreislauf geführt ist, so dass eine Strömungsaufteilung des Wärmeträgermediums mit der Vorlauftemperatur zwischen dem Pufferschichtspeicher und dem Wärmeträgerkreislauf erfolgt.

Vorteilhaft wird beim Erreichen des vorgegebenen Ladungsgrades des Pufferspeichers und/oder eines Warmwasserladungsgrades des Warmwasserspeichers der Kältemittelkreislauf sowie vorteilhaft auch die Ladepumpe ausgeschaltet. Die Pufferpumpe kann weiterlaufen und zumindest der Lufterhitzter wird weiter mit Wärmeträgerfluid aus dem Pufferspeicher durchströmt.

Gemäß einem vorteilhaften Verfahrensgedanken ist der Kältemittelkreislauf 100 in einem zweiten Heizbetrieb in der Leistung reduziert oder abgeschaltet, wenn der Pufferspeicher im zweiten Heizbetrieb einen vorgegebenen Ladegrad aufweist. Die Ladepumpe wird vorteilhaft im zweiten Heizbetrieb in einer Drehzahl reduziert oder abgeschaltet und die Heizkreispumpe wird weiter betrieben, um einen vorgegebenen Massenstrom des Wärmeträgermediums mit einer Vorlauftemperatur tv aus dem Pufferspeicher durch den Wärmeträgerkreislauf zu pumpen.

Die Heizkreispumpe pumpt im zweiten Heizbetrieb Wärmeträgermedium vorteilhaft aus der oberen Zone Zo des Schichtspeichers zum Lufterhitzer, wobei das Wärmeträgermedium insbesondere eine Temperatur nahe der Vorlauftemperatur tv oder die Vorlauftemperatur tv aufweist.

Vorteilhaft wird zur Temperierung einer Zuluft ZU, wenigstens eines Raumes, mit einer Wärmepumpenanlage, $CO_2$ als Kältemittel im Kältemittelkreis umgetrieben, wobei das $CO_2$ bei Heißgastemperaturen bis zu 160 °C Energie mit dem Wärmeträgermedium austauscht, so dass das Wärmeträgermedium auf bis zu 90 °C erhitzt werden kann und die Luft in einem Lufterhitzer 230 auf eine Temperatur von bis zu gut 50° erwärmt.

Die Außenluft wird vorteilhaft, soweit sie Temperaturen nahe oder unter dem Gefrierpunkt aufweist, insbesondere Temperaturen unter 1 °C, in einem Vorheizer auf wenigstens eine Mindesttemperatur erhitzt, zumindest aber auf eine Temperatur von ca. -4 °C bis +1 °C. Dann wird die Luft in einem Luft/Luft-Wärmetauscher von der aus einem Raum kommenden Abluft weiter auf ca. 12 °C bis 25 °C erwärmt und strömt danach in den Lufterhitzter, wo die Luft von ca. 12 °C bis 25 °C vorzugsweise bis auf unter 60 °C, insbesondere abhängig von der Außenluft auf 30 °C bis 50 °C erwärmt wird, wobei die Luft als Zuluft ZU zumindest in einen Raum oder in ein Gebäude einströmt und mit der erwärmten Zuluft ZU von bis zu insbesondere 50 °C der Raum und das Gebäude beheizt werden.

Gemäß einem vorteilhaften Verfahrensschritt ist in einem Wärmeaustauscher 632, der in Strömungsrichtung des Wärmeträgermediums nach dem Lufterhitzter 230 angeordnet ist, ein flüssigkeitsgeführter Heizkreis 630 vorgesehen, der nach Bedarf, insbesondere abhängig vom ersten Temperaturparameter oder vom zweiten Temperaturparameter oder der Außenluft thermisch an den Wärmeträgerkreislauf 600 ankoppelbar ist

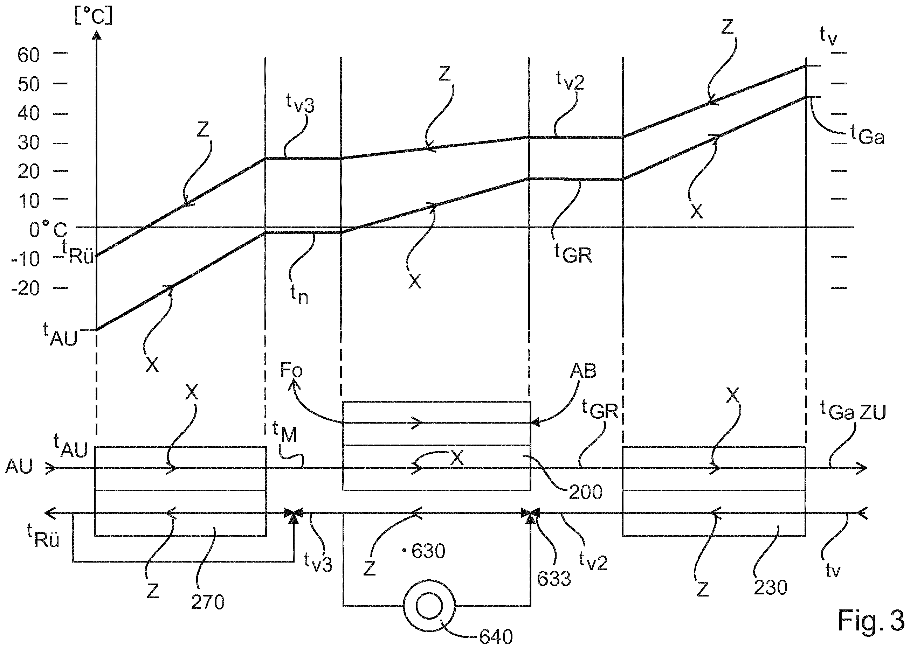

Figur 3 zeigt ein Verfahren zur Aufheizung von Zuluft ZU für einen Raum, wenn im Außenbereich, aus dem Außenluft AU angesaugt wird, Temperaturen unter dem Gefrierpunkt liegen. Im Beispiel der Figur 3 ist eine sehr niedrige Außentemperatur von unter -20 °C angenommen. $T_{AU}$ liegt also bei ca. -25 °C und wird im Vorheizer 270 auf eine Mindesttemperatur $t_M$ gebracht. Die Mindesttemperatur $t_M$ liegt vorteilhaft in einem Bereich zwischen -5 °C und +3 °C. Im Ausführungsbeispiel liegt die Mindesttemperatur bei -3 °C. Dies ist vorteilhaft, wenn die Außentemperatur sehr niedrig ist und die Luft eine geringe Feuchte aufweist. Eine Vereisung ist dann relativ unwahrscheinlich und daher muss auch die Vorheizung nicht so hoch ausfallen. Im Verlauf einer Vereisung wird beim Luft/Luft-Wärmeübertrager 200 die Mindesttemperatur auf Temperaturen von über 0 °C angehoben, insbesondere auf eine Temperatur zwischen 0 °C und 3 °C. Im Weiteren strömt die Luft nach dem Vorheizer 270 zum Luft/Luft-Wärmeübertrager 200, wo sie von der zu strömenden Abluft AB durch die Wärmeübertragung von der Abluft auf die zu strömende Luft auf eine Temperatur $t_{GR}$ von ca. 17 °C gebracht wird. Im Anschluss wird die zu strömende Luft in einem Lufterhitzer 230 auf eine Temperatur $t_{GA}$ gebracht, mit der der Raum beheizt wird. Diese Temperatur liegt in einem ersten Heizbetrieb über der Raumtemperatur $t_R$. Im ersten Heizbetrieb ist die zweite Temperatur am Austritt des Lufterhitzers größer als die Raumtemperatur $t_R$ und im Ausführungsbeispiel kleiner gleich 50 °C.

In diesem Prozess kühlt sich das Wärmeträgermedium von einer Vorlauftemperatur tv im Lufterhitzer 230 auf eine zweite Vorlauftemperatur $t_{V2}$ ab. Bei niedrigen Außentemperaturen wird im Ausführungsbeispiel zusätzlich Wärme vom Heizkreis 630 aufgenommen und an eine Wärmesenke 640 abgegeben, vorteilhaft ist dieses ein Flüssigkeitssystem. Dabei wird das Wärmeträgermedium von der zweiten Vorlauftemperatur tvz auf eine dritte Vorlauftemperatur tva abgekühlt. Diese Abkühlung des Wärmeträgermediums erfolgt in einem Heizkreiswärmeübertrager 632, bei dem die Wärme des Wärmeträgermediums auf eine Heizkreisflüssigkeit des Heizkreises 630 übertragen wird. Die Abkühlung von $t_{V2}$ auf $t_{V3}$ beträgt dabei etwa 3 K bis 10 K. Der Heizkreiswärmeübertrager 632 ist in Strömung des Wärmeträgermediums hinter dem Vorheizer 270 und vor dem Lufterhitzer 230 angeordnet.

Zwischen dem Lufterhitzer 230 und dem Vorheizer 270 ist luftseitig der Luft/Luft-Wärmeaustauscher 200 angeordnet. Zwischen dem Vorheizer 270 und dem Lufterhitzer 230 wird die Luft somit in einem Luft/Luft-Wärmeaustauscher 200 erwärmt, während das Wärmeträgermedium durch eine Wärmesenke 640 eines Heizkreises 630 durch eine Flüssigkeit, hier die Heizkreisflüssigkeit, abgekühlt wird. In Figur 3 erfolgt die Abkühlung des Wärmeträgermediums durch die Wärmesenke 640 dadurch, dass das Wärmeträgermedium durch ein Dreiwegeumschaltventil 633 direkt in den Heizkreis 630 geleitet wird und somit direkt zur Wärmesenke 640 geführt wird. Somit wird das Wärmeträgermedium direkt von der Wärmesenke 640 gekühlt.

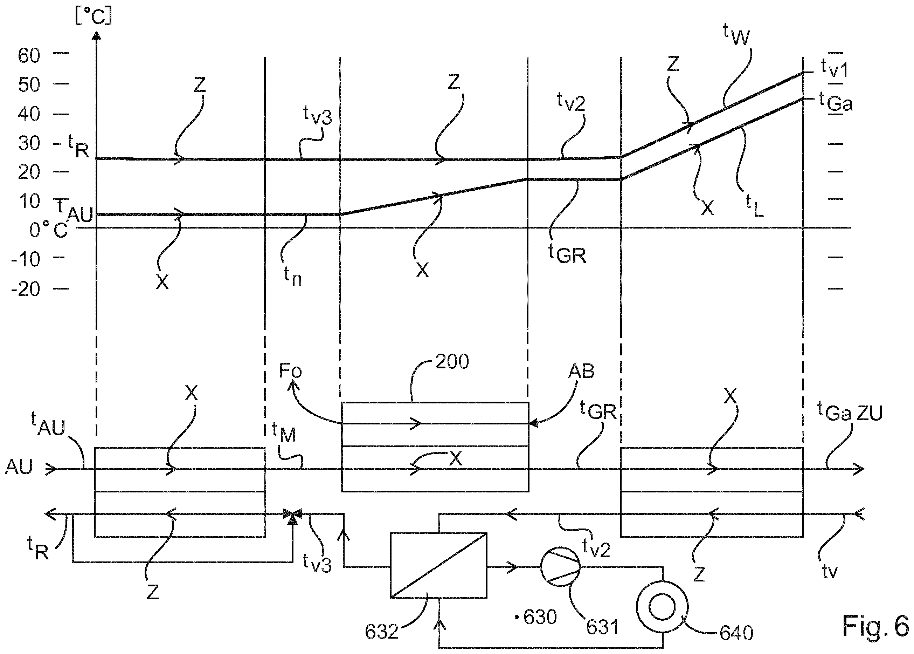

In einem anderen Heizfall gemäß Figur 6 strömt das Wärmeträgermedium durch einen Heizkreiswärmeübertrager 632. Im Heizkreis 640 wird Heizflüssigkeit von einer Pumpe 631 bedarfsweise umgetrieben. Dies erfolgt wie in Figur 3 bei kühlen Temperaturen vorzugsweise, um einen Fußboden oder einen Radiator mit Wärme zu versorgen. Das Wärmeträgermedium steht hierbei nicht im Kontakt mit der durch den Heizkreis 630 fließende Heizflüssigkeit. Über den Heizkreiswärmeübertrager 632 wird Wärme vom Wärmeträgermedium auf die Heizkreisflüssigkeit übertragen.

Das Wärmeträgermedium strömt somit, nachdem es Wärme an den Heizkreis 630 abgegeben hat bzw. Wärme an die Wärmesenke 640 abgegeben hat, zum Vorheizer 270, Im Vorheizer 270 wird das Wärmeträgermedium von der zu strömenden Außenluft mit der Außenlufttemperatur tv auf eine Rücklauftemperatur $t_{Rü}$ abgekühlt. Vorzugsweise liegt die Rücklauftemperatur bei Temperaturen noch über dem Gefrierpunkt. Je nach Außentemperatur kann aber auch das Wärmeträgermedium auf Temperaturen unter dem Gefrierpunkt abgekühlt werden. Bei sehr niedrigen Außentemperaturen, insbesondere Außentemperaturen $t_{AU}$ von unter -10 °C, erfolgt eine Abkühlung des Wärmeträgermediums am Ausgang des Vorheizers 270 auf Temperaturen insbesondere zwischen -10 °C und 0 °C.

Die Erwärmung der Außenluft erfolgt somit in einer ersten Stufe in einem Vorheizer 270, bei dem vom vollen Wärmeträgermedium Wärme an die Luft übertragen wird. In einem zweiten Schritt erfolgt eine Erwärmung der dem Raum zuzuführen Luft in einem Luft/Luft-Wärmeaustauscher und die Erhitzung auf eine im Raum zugeführte Zuluft mit einer zweiten Temperatur am Austritt des Lufterhitzers von bis zu ca. 50 °C. Dabei wird das Wärmeträgermedium, zumindest bei sehr kalten Außentemperaturen in drei Stufen abgekühlt. Die erste Stufe erfolgt in dem Lufterhitzer 230, bei dem das Wärmeträgermedium Wärme an die Zuluft abgibt, in einem zweiten Schritt erfolgt eine Wärmeabgabe des Wärmeträgermediums vorteilhaft in einem flüssigkeitsbasierten Wärmeaustauscher oder durch Leitung der Flüssigkeit im Heizkreis 630, wonach das Wärmeträgermedium in einem Vorheizer Wärme direkt an die kalt zuströmende Außenluft abgibt.

Dabei wird das Wärmeträgermedium bei sehr niedrigen Außentemperaturen, unter 10 °C, von Temperaturen oberhalb von 50 °C, insbesondere oberhalb 70 °C auf Temperaturen unter den Gefrierpunkt abgekühlt. Während dessen wird die zugeführte Luft von Temperaturen von unterhalb ca.-7 °C auf Temperaturen von insbesondere bis zu 50 °C angehoben.

Das Wärmeträgermedium ist daher vorzugsweise eine frostgeschützte Flüssigkeit, insbesondere Sole.

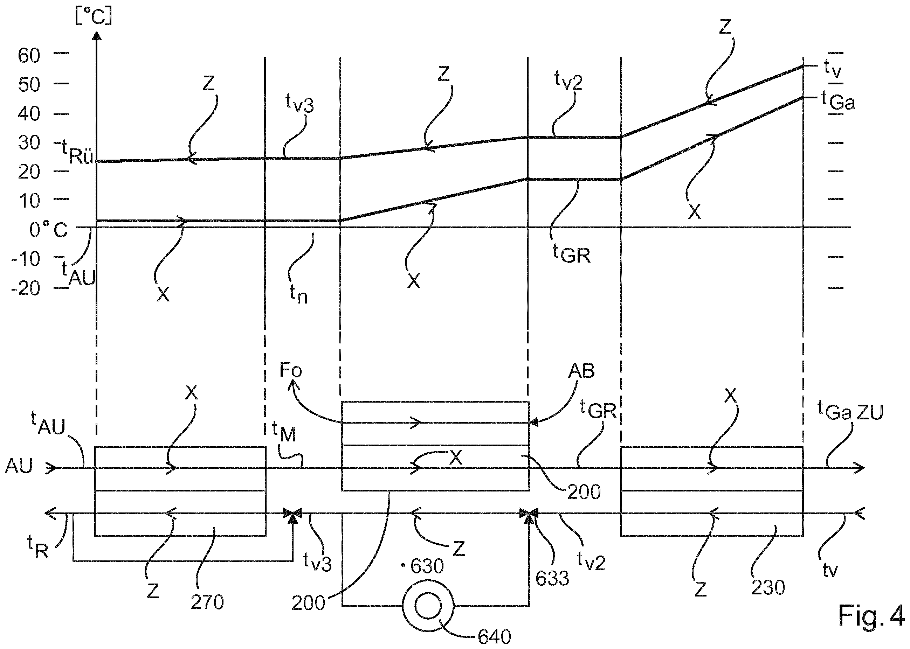

Gemäß Figur 4 ist die Aufheizung der Luft oder der Außenluft, die dem Raum als Zuluft zugeführt werden soll, bei Temperaturen leicht oberhalb des Gipfelpunktes gezeigt, In diesein Fall, bei dem leichte Plusgrade von 0 °C bis ca. -5 °C herrschen, erfolgt vorzugsweise, wie im Ausführungsbeispiel gezeigt, keine Aufheizung der Außenluft im Vorheizer 270. Der Vorheizer 270 wird in einem solchen Heizfall bei Temperaturen, die vorzugsweise leicht oberhalb des Gefrierpunkts liegen, umgangen, vorzugsweise mittels eines Bypasses. Danach erfolgt die Aufheizung im Luft/Luft-Wärmeübertrager 200 auf eine Temperatur knapp unterhalb der Raumtemperatur $t_R$. Im Weiteren strömt die Luft zum Lufterhitzer 230, wo sie auf eine vorgegebene zweite Temperatur am Austritt des Lufterhitzers $t_{GA}$ erwärmt wird, die insbesondere zwischen 30 °C und 50 °C liegt. Bei Außentemperaturen knapp oberhalb des Gefrierpunkts liegt die zugeführte Luft mit der zweiten Temperatur am Austritt des Lufterhitzers $t_{GA}$ etwa um 35 °C bis 40 °C. Das Wärmeträgermedium wird entsprechend zweistufig, zunächst im Lufterhitzt abgekühlt, auf eine Temperatur $t_{V2}$ und dann im Heizkreis 630 oder durch den Heizkreis 630 auf eine dritte Vorlauftemperatur $t_{V3}$. Bei Plusgraden, auch schon bei leichten Plusgraden, entspricht die dritte Vorlauftemperatur $t_{V3}$ vorzugsweise der Rücklauftemperatur $t_R$. In einem weiteren Fall wird die Anlage auch zum Kühlen benutzt. Hierbei erfolgt eine Abkühlung der Zuluft im Luft/Luft-Wärmeaustauscher von einer Außentemperatur, die vorzugsweise über 25 °C liegt, auf eine Temperatur, die leicht über der Raumtemperatur $t_R$ liegt. Im Beispielsfall wird die zugeführte Luft von einer Außentemperatur von 30 °C oder auch über 30 °C auf eine Temperatur leicht über der Raumtemperatur abgekühlt. Dies erfolgt durch die Abluft, die mit der Raumtemperatur $t_R$ in den Luft/Luft Wärmeaustauscher strömt, vorzugsweise etwa mit 20 °C bis 25 °C. Somit erfolgt eine Abkühlung durch die Fortluft. Eine weitere Abkühlung erfolgt dann im Lufterhitzer 230, der bei einem inversen Betrieb des Kältemittelkreislaufs Wärme von der Luft an das Wärmeträgermedium überträgt. Somit erfolgt hierbei eine Abkühlung der Zuluft auf eine Temperatur, die vorzugsweise unterhalb der Raumtemperatur liegt, um den Raum zu kühlen.

Figur 6 zeigt den Fall, dass bei Außentemperaturen, die vorzugsweise über dem Gefrierpunkt oder deutlich über dem Gefrierpunkt liegen, der Heizkreis 630 abgeschaltet ist. Demnach erfolgt keine Wärmeabgabe des Wärmeträgermediums an den Heizkreis 630. Die Außenluft wird auch im Vorheizer 270 nicht von dem Wärmeträgermedium gekühlt, da der Vorheizer 270 von einem Bypass umgeben ist und das Wärmeträgermedium nicht durch den Vorheizer 270, sondern vorbei am Lufterhitzer 230 durch den Bypass strömt. Die Außenluft wird daher mit etwa der Außenlufttemperatur $t_{AU}$ dem Luft/Luft-Wärmeübertrager 200 zugeführt, wo sie von der Außenlufttemperatur auf etwa 17 °C bis 20 °C, zumindest auf eine Temperatur leicht unter der Raumtemperatur $t_R$ angehoben wird. Dies erfolgt durch einen Wärmeübergang von der Abluft AB auf die Außenluft AU. Die Außenluft wird dann mit etwa 17 °C bis 20 °C dem Lufterhitzer 230 zugeführt, wo sie auf Temperaturen zwischen 30 °C und 40 °C angehoben wird, um den Raum zu beheizen. Bei Außentemperaturen von ca. 10 °C erfolgt eine Aufheizung der im Raum zugeführten Luft von einer Außentemperatur von ca. 10 °C auf etwa 30 °C bis 34 °C.

Im Ausführungsbeispiel ist vorteilhaft im Ladekreislauf 701 ist ein Massen- oder Volumenstrommesser $V_{701}$ angeordnet. Im Wärmeträger Kreislauf 600 ist vorteilhaft ein Massen- oder Volumenstrommesser $V_{600}$ angeordnet.

An den Regler 4 sind vorteilhaft wenigstens zwei der folgenden Sensoren zur Messung von Temperaturen (Temp) angeschlossen, womit vorzugsweise der erste Temperaturparameter T1 und/oder der zweite Temperaturparameter T2 im Regler gebildet wird, womit die Leistung des Kältemittelkreislaufs, die Pumpen (620, 720) sowie die Temperaturen des Wärmeträgermediums geregelt werden:

| | |
|---|---|
| Warmwasser Rücklauf Temp | $t_{WRL}$ |
| Warmwasserspeicher Vorlauf Temp | $t_{WVorl}$ |
| Warmwasserspeicher Temp | $T_{WDHW}$ |
| Warmwasserspeicher Integral Temp | $t_{Wint}$ |
| Warmwasserspeicher Dom Temp | $t_{WDom}$ |
| Vorlauftemperatur Warmwasserwärmeaustauscher Temp | $t_{WPWVL}$ |
| Pufferspeicher Rücklauf Temp | $t_{WRück}$ |
| WW-SOLLTEMPERATUR | $T_{WWsoll}$ |
| Vorlauftemperatur Wärmeträgerkreislauf | $t_{VHK1}$ |
| Rücklauftemperatur Wärmeträgerkreislauf | $t_{RHK2}$ |
| Temperatur Wärmeträgermediums nach Gaskühler | $t_{WPVL}$ |
| Zweite Temperatur der Zuluft | $t_{GA}$ |
| Zulufttemperatur | $t_{zu}$ |

(fortgesetzt)

| | |
|---|---|
| Temperatur der Luft vor dem Lufterhitzter 230 | $t_{Ge}$ |
| Temperatur nach dem Luft/Luft-Wärmeaustauscher | $t_{GR}$ |
| Ablufttemperatur | $t_{AB}$ |
| Außenlufttemperatur | $t_{AU}$ |
| Mindesttemperatur | $t_M$ |
| Wärmeträgermediumtemperatur vor dem Vorheizer | $t_{INV}$ |
| Lufttemperatur nach Verdampfer | $t_{WPL2}$ |
| Lufttemperatur vor dem Verdampfer | $t_{WPL1}$ |
| Heißgastemperatur des Kältemittels | $t_{WPHG}$ |
| Temperatur des Kältemittels nach dem Verdampfer | $t_{WPEV1}$ |
| Temperatur im Pufferspeicher | $t_{PU}$ |
| Vorlauftemperatur vor dem Heizkreiswärmeübertrager | $t_{VHK2}$ |

Der Gaskühler 170 für das Wärmeträgermedium ist über eine Zuleitung 180 und eine Leitung 184 für Kältemittel an den Kältemittelkreislauf 100 angeschlossen. Weiterhin ist der Verdichter 110 über eine Leitung 185 mit dem Verdampfer 160 verbunden. Dieser Verdampfer 160 ist wiederum mit der Drossel 150 verbunden, wobei die Drossel 150 in Strömungsrichtung c des Kältemittels vor dem Verdampfer 160 liegt. In Strömungsrichtung c betrachtet, liegt die Drossel 150 hinter dem Gaskühler 170. Vor dem Verdampfer 160 des Kältemittelkreislaufs 100 ist eine Öffnung 161 vorgesehen, über die dem Verdampfer 160 Außenluft AU zuführbar ist.

Außenluft AU wird einem Vorheizer 270 mit einer Außenlufttemperatur $t_{Au}$ durch einen Kanal 260 zugeführt. Die Außenluft AU durchströmt den Vorheizer 270 und erwärmt sich dabei. Über einen Außenluftkanal 280 strömt die Außenluft dann weiter zum Luft/Luft-Wärmeaustauscher 200. Diesem Luft/Luft-Wärmeaustauscher 200 wird weiterhin Abluft AB mit einer Ablufttemperatur $t_{AB}$ über einen Abluftkanal 210 zugeführt. Mit der Abluft AB wird die Außenluft AU bei einer stofflichen Trennung erwärmt. Es erfolgt im Luft/Luft-Wärmeaustauscher 200 ein Wärmeübergang von der Abluft AB auf die Außenluft AU. Die so erwärmte Außenluft AU wird von einem Zuluftventilator 221 durch einen Zuluftkanal 220 gefördert und tritt mit einer Temperatur $t_{Ge}$ der Zuluft ZU in den Lufterhitzer 230 ein. Im Lufterhitzer 230 wird die Zuluft ZU auf die Temperatur $t_{GA}$ erwärmt und strömt weiter als Zuluft ZU mit ca. 25 °C bis 50 °C über einen Zuluftanschluss 240 in ein nicht dargestelltes Gebäude bzw. in ein nicht dargestelltes Luft-Verteilungssystem eines Gebäudes.

Die im Luft/Luft-Wärmeaustauscher 200 abgekühlte Abluft AB strömt als Fortluft FO aus dem Luft/Luft-Wärmeaustauscher 200 aus. Gefördert wird die Fortluft mit einem Fortluftventilator 251. Der Fortluftkanal 250 ist im Ausführungsbeispiel so auf den Verdampfer 160 gerichtet oder mit dem Verdampfer 160 verbunden, dass die Fortluft FO auf den Verdampfer 160 geleitet ist. Vorteilhaft ist es weiterhin, zur Fortluft FO Außenluft AU hinzuzumischen. Diese Außenluft AU wird im Ausführungsbeispiel durch das Venturi-Prinzip in die strömende Fortluft FO gemischt und diese Mischung aus Fortluft FO und Außenluft AU dem Verdampfer 160 zugeführt.

Im normalen Heizbetrieb ist der Gaskühler 170 für das Wärmeträgermedium von Kältemittel durchströmt, welches vom Verdichter 110 von einem niedrigen Druck, insbesondere von ca. 20 bar - 50 bar, in der Leitung 185 auf einen hohen Druck, insbesondere von über 73 bar, in der Zuleitung 180 verdichtet wird. Im Gaskühler 170 für Wärmeträgermedium wird Wärme vom Kältemittel auf das Wärmeträgermedium übertragen und danach vom Wärmeträgermedium auf die Zuluft ZU.

Im Falle einer Warmwasserheizung oder Warmwassererwärmung, ist das Dreiwegeventil 710 so geschaltet, dass das Wärmeträgermedium ausschließlich oder zumindest zu einem Anteil zum Warmwasser-Wärmeaustauscher 330 geleitet ist.

Im Ausführungsbeispiel durchströmt das Wärmeträgermedium vorteilhaft auch den SolarWärmeaustauscher 430.

Der Pufferspeicher 610 dient dazu, insbesondere überschüssige Heizenergie zu speichern und später bei einem abgeschalteten Verdichter oder beim Abtauen abzugeben. Dabei wird der Pufferspeicher 610 vorteilhaft so be- und entladen, dass ein hoher Temperaturgradient zwischen Pufferaustritt 612 in den Heizkreis und Pufferrücklauf aus dem Heizkreis, bzw. dem Wärmeträgerkreislauf 600 erhalten bleibt, um den transkritischen Prozess im $CO_2$ Kältemittelkreislauf zu optimieren.

Im Kältemittelkreislauf 100 wird das im Gaskühler 170 abgekühlte $CO_2$ im Verdampfer 160, dem die Fortluft FO und/oder Außenluft AU oder eine Mischung daraus zugeführt wird, wieder verdampft und strömt in Richtung d in der Leitung 185 zum Verdichter 110. Somit wird der am Ende einem Raum zugeführten Zuluft ZU vorteilhaft in mehrfacher Weise Wärme zugeführt, erstens im Vorheizer 270, insbesondere um hier sicherzustellen, dass der Luft/Luft-Wärmeaustauscher 200 nicht einfriert, zweitens im Luft/Luft-Wärmeaustauscher 200, bei dem die als Außenluft AU eintretende Luft Wärme von der Abluft AB aufnimmt, und eine dritte Erwärmung erfährt die dann als Zuluft ZU bezeichnete ehemalige Außenluft AU im Lufterhitzer 230, so dass eine Zulufttemperatur bereitgestellt wird, die über der geforderten Raumtemperatur liegt.

Vorteilhaft erfolgt eine weitere Erwärmung der Zuluft ZU durch den Zuluftventilator 221, denn die im Zuluftventilator 221 umgesetzte Energie wird nicht vollständig in Strömungsenergie umgesetzt. Verlustbehaftete Wärmeenergie wird an dieser Stelle des Zuluftventilators 221 ebenfalls als Wärme der Zuluft ZU zugeführt. Diese sozusagen vierte Lufterwärmung ist im Vergleich zu den drei anderen Erwärmungen der Zuluft allerdings sehr gering.

Im Ausführungsbeispiel ist eine Wärmepumpenanlage mit einer Luftheizung gezeigt, mit der ein Gebäude mit einem geringen Wertwärmebedarf, wie bei einem Passivhaus, von ca. 1 - 2 kWh bei einer Außentemperatur von ca. -10 °C bis -15 °C beheizt werden kann. Bei Passivhäusern, mit einem geringen Wärmebedarf von 20 kWh/m$^2$ pro Jahr und weniger, kann mit der Luftheizung vorteilhaft eine vollständige Beheizung erfolgen. Der Vorteil der Erfindung liegt insbesondere darin, dass nur mit Luft geheizt wird und auf ein mit Wasser gefülltes Verteilsystem verzichtet werden kann. Die gesamte Wärme, die dem Gebäude zur Heizung zugeführt wird, wird über die Zuluft ZU in das Gebäude abgegeben. Daher wird die Zuluft ZU bei einer Außentemperatur von ca. -10 °C oder -15 °C auf etwa 40 °C bis 60 °C, insbesondere etwa 50 °C erhitzt. Bei einem Gebäude zwischen 150 m$^2$ und 200 m$^2$ Wohnfläche erfolgt eine vollständige Beheizung vorteilhaft ausschließlich über die Zuluft ZU oder ergänzend auch mit einem Heizkreis 630.

im Heizkreis 630 wird mit der Heizflüssigkeit eine Leistung von etwa 300 bis 1500 Watt an die Räume abgegeben, insbesondere weniger als 1000 W, wobei sich ein Wert zwischen 400 und 800 W als besonders effizient herausgestellt hat. über die Lüftungsanlage wird eine Heizleistung zwischen 1000 und 2500 Watt in einem üblichen Einfamilienpassivhaus, mit ca. 150 m$^2$ übertragen. Ein Leistungsverhältnis zwischen Luftleistung und Heizfluidleistung liegt demnach bei ca. bei deutlich über 1. In einem Beispiel eines Passivhauses mit 150 m$^2$ ist die Luftheizleistung 2000 W und die Heizfluidleistung 700 W. Demnach ist das Leistungsverhältnis der Luftheizleistung zur Heizfluidleistung etwa 2,6. Vorteilhaft wird einem CO2 Kältemittelkreislauf ein Leistungsverhältnis der Luftheizleistung zur Heizfluidleistung von größer zwei angegeben, insbesondere größer 2,5. Damit wird vorteilhaft eine deutlich stärkere Luftheizleistung der Zuluft ZU vorgesehen als eine Heizfluidleistung im Heizkreis 630.

Vorteilhaft wird mit dem System, wie bereits beschrieben insbesondere bei niedrigen Temperaturen, Fortluft FU und vorzugsweise zugemischte Außenluft AU als Mischluft dem Verdampfer 160 zugeführt. Bei einer Mischung von Fortluft zu Außenluft ergibt sich bei einer Außentemperatur von ca. -15 °C und einer Fortlufttemperatur von ca. -10 °C eine etwas über der Außenluft liegende Temperatur, die dem Verdampfer zugeführt wird. Bei der beschriebenen Verwendung von $CO_2$ als Kältemittel ergibt sich ein besonderer Vorteil durch geringe Exergieverluste und durch einen relativ geringen Anstieg der Entropie. Insbesondere dadurch, dass die Luft im Lufterhitzer 230 nur von ca. 15-20 °C auf ca. 30-50 °C erwärmt werden muss.

Vorteilhaft ist der Verdampfer 160 der Wärmepumpe mit einem Luftstrom beaufschlagt, der zusätzlich von einem Verdampferventilator 162 erzeugt ist.

Der Verdampferventilator 162 kann insbesondere auch als Fortluftventilator 251 arbeiten und fördert dann Fortluft FO und Außenluft AU allein, wobei der Fortluftventilator entfällt. In einem anderen vorteilhaften Ausführungsbeispiel ist der Verdampferventilator zusätzlich zum Fortluftventilator angeordnet. Weiterhin ist gemäß einem vorteilhaften Ausführungs beispiel nur ein Fortluftventilator 251 vorgesehen, der insbesondere in Kombination mit der Öffnung 161 auch Außenluft zumindest indirekt ansaugt und auf den Verdampfer fördert.

Ein erster Kreisprozess bezieht sich auf eine Außentemperatur von um die 10 bis 15 °C bei einer in der Regel gewünschten Raumtemperatur von ca. 20 - 22 °C. Die Energie des Kältemittels beträgt bei ca. 10 °C und ca. 45 bar 425 kJlkg. Das Kältemittel wird auf ca. 55 °C und ca. 80 bar verdichtet und weist einer Enthalpie von ca. 438 kJ/kg auf. Vom Verdichter aus wird das Kältemittel zum Gaskühler 170 für das Wärmeträgermedium geleitet und gibt hier Enthalpie ab, so dass das aus dem Gaskühler 170 für das Wärmeträgermedium austretende Kältemittel etwa eine Enthalpie von 220 kJ/kg bei ca. 10 °C und ca. 80 bar aufweist.

Eine weitere optionale vorteilhafte Unterkühlung bzw. Wärmeabgabe des Kältemittels kann erfolgen, in dem das Kältemittel eine Enthalpie von 200 kJ/kg bei ca. 0 °C bei ca. 80 bar aufweist. In einem nicht dargestellten Kältemittelunterkühler kann das Kältemittel vorteilhaft etwa eine Enthalpie von ca. 220 auf ca. 200 kJ/kg an die Außenluft AU abgeben.

Danach strömt das Kältemittel zur Drossel 150 und es erfolgt eine Expansion im idealisierten Zustand auf einer Enthalpie von ca. 200 kJ/kg mit einem Druck von etwa 43 bar und einer Temperatur von ca. 0 °C. Das Kältemittel strömt weiter vorteilhaft zum Verdampfer 160, wo es in der Enthalpie von 200 auf 425 kJ/kg bei einem Druck von ca. 45 bar und auf eine Temperatur von 10 °C ansteigt.

Der zweite Prozess betrachtet in etwa eine Außentemperatur von -5 bis -15 °C, insbesondere ca. -10 °C. Dann wird dem Verdampfer 160 Außenluft AU und Fortluft FO so zugeführt, dass die Mischtemperatur der dem Verdampfer zugeführten Mischung aus Außenluft AU und Fortluft FO etwas über der Temperatur $t_{AU}$, insbesondere bei ca. 1 - 5 °C liegt. Ausgehend von einer Enthalpie von 275 kJ/kg nimmt das Kältemittel im Verdampfer 160 Enthalpie bis zu einem Wert von ca. 438 kJ/kg oder 440 kJ/kg auf. Dann wird das Kältemittel mit -5 °C bei ca. 30 bar auf 68 °C und ca. 80 bar verdichtet, wodurch eine weitere Enthalpie-Zunahme auf ca. 475 kJ/kg erfolgt. Der Druck beträgt nun etwa 80 bar, wodurch das Kältemittel grob um ca. 50 bar im Druck angehoben ist. Des Weiteren strömt das Kältemittel nun durch den Gaskühler 170 für das Wärmeträgermedium und die Enthalpie wird auf ca. 290 kJ/kg bei 30 °C und wird auf ca. 80 bar reduziert. Es erfolgt eine weitere optionale Reduzierung auf ca. 275 kJ/kg bei ca. 27 °C und ca. 80 bar dann im Gaskühler 170 oder in einem nicht dargestellten Kältemittelunterkühler. Das Kältemittel wird der Drossel 150 zugeführt, wo es im Druck von ca. 80 bar auf ca. 30 bar bei ca. -5 °C reduziert wird. Die Druckreduktion erfolgt hier in idealisierter Weise isenthalp. An einem Punkt p5 bei ca. 60 bar und einer Enthalpie von ca. 275 kJ/kg geht das Kältemittel $CO_2$ in den Nassdampfzustand über.

Das Kältemittel wird vorteilhaft mit etwa 26 °C aus dem Gaskühler 170 für das Wärmeträgermedium austreten. Auf der Eingangsseite des Kältemittels tritt das Kältemittel mit einer Temperatur tüa von ca. 80 °C in den Gaskühler 170 für das Wärmeträgermedium ein. Die Zuluft wird im Fallbeispiel von -15 °C auf eine Temperatur von wenigstens 40 °C, insbesondere auf ca. 50 °C erwärmt. Im Diagramm in Fig. 2 verläuft der Anstieg der Lufttemperatur $t_{Ge}$ von ca. 16 °C auf einen Temperaturwert $t_{GA}$ auf ca. 50 °C. Der Eingangswert der Temperatur des Kältemittels $t_{Üe}$ beträgt ca. 80 °C und der Ausgangswert der Temperatur des Kältemittels beträgt ca. 26 °C. Bei einem vorteilhaften Temperaturabfall von ca. 80 °C auf ca. 26 °C verliert das Kältemittel eine entsprechende Enthalpie von ca. 180 - 300 kJ/kg und eine entsprechende Wärme wird über das Wärmeträgermedium an die Luft übertragen. So verhält es sich vorteilhaft auch, wenn eine Warmwasserbereitung erfolgt. Nur ist hier der Temperaturunterschied zumindest zu Anfang der Warmwasserbereitung geringer, die bei ca. 35 °C beginnen sollte, damit ein vernünftiges Duschen oder Ähnliches erfolgen kann. Das Warmwasser soll in der Temperatur $t_w$ auf vorteilhaft wenigstens 50 °C angehoben werden.

Vorteilhaft ist der Luft-Luft-Wärmeübertrager als Kreuz-Gegenstromwärmeaustauscher oder Gegenstromwärmeaustauscher ausgebildet.

## Patentansprüche

1.  Wärmepumpenanlage (1) mit

    einem Kältemittelkreislauf (100) zur Wärmeerzeugung und mit einem Gaskühler (170),
    einem Luft/Luft-Wärmeaustauscher (200),
    einem Warmwasserbehälter (300),
    einem Pufferspeicher (610),
    einem Ladekreislauf (700) mit einer primären Vorlaufleitung (701) und einer Rücklaufleitung (730) und einem Dreiwegeventil (710), wobei ein Wärmeträgermedium in dem Ladekreislauf (700) fließen kann, wobei über das Dreiwegeventil (710) eine Warmwasserbereitung oder ein Heizen/Kühlen von Räumen erfolgen kann,
    wobei der Gaskühler (170) in dem Kältemittelkreislauf (100) mit der primären Vorlaufleitung (701) gekoppelt ist, wobei in einer Strömungsrichtung (x) von Außenluft in die Wärmepumpenanlage (1) zunächst ein Vorheizer (270) angeordnet ist, der zu einer bedarfsgerechten Vorerwärmung von Außenluft (AU) auf einen Mindesttemperaturwert ($t_M$) geeignet ist,
    in Strömungsrichtung nach dem Vorheizer (270) der Luft/Luft-Wärmeaustauscher (200), geeignet zu einer stofflich getrennten Erwärmung der Außenluft mittels Abluft vorgesehen ist,
    in Strömungsrichtung (x) nach dem Luft/Luft-Wärmeaustauscher (200) ein Lufterhitzer (230) als Wärmeträgermedium/Luft-Erhitzer vorgesehen ist, der dazu geeignet ist, die Au-ßenluft auf eine Zulufttemperatur ($t_{GA}$)zu temperieren,
    wobei an dem Pufferspeicher (610) über eine Fluidleitung (612) in einer Strömungsrichtung (z) des Wärmeträgermediums zunächst der Lufterhitzer (230) angeschlossen ist, der auch an einen Zuluftkanal (220) und einen Zuluftanschluss (240) angeschlossen ist und wobei an dem Pufferspeicher (610) weiter in Strömungsrichtung (z) des Wärmeträgermediums der Vorheizer (270) angeschlossen ist.

2.  Wärmepumpenanlage (1) nach Anspruch 1, **dadurch gekennzeichnet, dass** der Vorheizer (270) einen Außenluftanschluss (260) aufweist und der Lufterhitzer (230) mit einem Gebäudeanschluss/Zuluftanschluss verbunden ist.

3.  Wärmepumpenanlage (1) nach Anspruch 2, **dadurch gekennzeichnet, dass** der Luft/Luft Wärmeaustauscher (200) einen Abluftkanal (210) für Abluft (AB), einen Zuluftkanal (220) für Zuluft (ZU), einen Fortluftkanal (250) für Fortluft (FO) aufweist, wobei der Luft/Luft Wärmeaustauscher (200) vorzugsweise so ausgestattet ist, dass die Fortluft (FO), angetrieben von einem Fortluftlüfter (251) im Gegenstrom zum Außenluftstrom (AU), angetrieben von einem Zuluftventilator (221), strömen kann.

4.  Wärmepumpenanlage (1) nach einem der vorhergehenden Ansprüche,
    **dadurch gekennzeichnet,**

**dass** die primäre Vorlaufleitung (701) über einen ersten Eintritt (6111) des Pufferspeichers (610) an ein erstes Pufferrohr (6110) angeschlossen ist, welches durch eine obere Zone (Zo) des Pufferspeichers (610) führt, wo das erste Pufferrohr (6110) wenigstens eine erste Rohröffnung (6113) aufweist, die Rücklaufleitung (730) über einen zweiten Austritt (6122) an ein zweites Pufferrohr (6120) angeschlossen ist, wobei das zweite Pufferrohr (6120) durch eine untere Zone (Zu) des Pufferspeichers (610) geführt ist und das zweite Pufferrohr (6120) wenigstens eine zweite Rohröffnung (6123) aufweist.

5. Wärmepumpenanlage (1) nach Anspruch 4,
**dadurch gekennzeichnet,**
**dass** der Pufferspeicher (610) innen ein Verhältnis zwischen einem Durchmesser (D) und einer Höhe (H) von weniger als 0,25, insbesondere kleiner ca. 0,15, aufweist.

6. Wärmepumpenanlage (1) nach Anspruch 5, mit einem Pufferspeicher, welcher ein Volumen zur Aufnahme eines Wärmeträgermediums, mit einer Höhe (H), mit einem Durchmesser (D), mit wenigstens einem Eintritt (6111, 6121) und wenigstens einen Austritt (6112, 6122) aufweist,
**dadurch gekennzeichnet,**
**dass** der Pufferspeicher (610) innen ein Verhältnis zwischen dem Durchmesser (D) und einer Höhe (H) weniger als 0,4 oder weniger als 0,2, insbesondere Verhältnisse zwischen 0,07 und 0,1, oder etwa 0,1 bis 0,2, aufweist.

7. Wärmepumpenanlage nach Anspruch 6,
**dadurch gekennzeichnet,**
**dass** der Pufferspeicher (610) eine Behälterwand (6140) zwischen einem oberen Klöpperboden (6130) und einem unteren Klöpperboden (6150) aufweist, wobei ein oberes Pufferrohr (6110) unterhalb des oberen Klöpperbodens (6130) durch die Behälterwand (6140) geführt ist und ein unteres Pufferrohr (6120) oberhalb des unteren Klöpperbodens (6150) durch die Behälterwand (6140) geführt ist.

8. Wärmepumpenanlage nach Anspruch 6 oder 7,
**dadurch gekennzeichnet,**
**dass** wenigstens ein Pufferrohr (6110, 6120) wenigstens eine Öffnung (6113, 6123), insbesondere einen Schlitz, aufweist und dass das Pufferrohr (6110, 6120) zu einem Klöpperboden (6130, 6150) hin gerichtet ist.

9. Verfahren zum Betrieb einer Wärmepumpenanlage (1), welche mit einem Kältemittelkreislauf (100) zur Wärmeerzeugung und mit einem Gaskühler (170), einen Luft/Luft-Wärmeaustauscher (200),

einem Warmwasserbehälter (300), einem Pufferspeicher (610), einem Ladekreislauf (700) mit einer primären Vorlaufleitung (701) und einer Rücklaufleitung (730) und einem Dreiwegeventil (710), wobei ein Wärmeträgermedium in dem Ladekreislauf (700) fließen kann, wobei über das Dreiwegeventil (710) eine Warmwasserbereitung oder ein Heizen/Kühlen von Räumen erfolgen kann, wobei der Gaskühler (170) in dem Kältemittelkreislauf (100) mit der primären Vorlaufleitung (701) gekoppelt ist,
wobei in einer Strömungsrichtung (x) von Außenluft in die Wärmepumpenanlage (1) zunächst ein Vorheizer (270) angeordnet ist, der zur einer bedarfsgerechten Vorerwärmung von Außenluft (AU) auf einen Mindesttemperaturwert ($t_M$) geeignet ist,
wobei in Strömungsrichtung nach dem Vorheizer (270) der Luft/Luft-Wärmeaustauscher (200), geeignet zu einer stofflich getrennten Erwärmung der Außenluft mittels Abluft vorgesehen ist,
wobei in Strömungsrichtung (x) nach dem Luft/Luft-Wärmeaustauscher (200) ein Lufterhitzer (230) als Wärmeträgermedium/Luft-Erhitzer vorgesehen ist, der dazu geeignet ist, die Außenluft auf eine Zulufttemperatur ($t_{GA}$) zu temperieren,
wobei in einem ersten Heizbetrieb ein Pufferspeicher (610) mit einem von einem Kältemittelkreislauf (100) temperierten Wärmeträgerfluid, welches mittels einer Ladepumpe (720) in einer Strömungsrichtung (y) umgepumpt wird, auf eine Vorlauftemperatur (tv) gebracht wird,
enthaltend die Verfahrensschritte,
dass das Wärmeträgerfluid im ersten Heizbetrieb durch eine Einstellung einer Heizleistung des Kältemittelkreislaufs (100) der Wärmepumpenanlage (1) abhängig von einem ersten Temperaturparameter (T1) auf die Vorlauftemperatur (tv) erwärmt wird,
wobei Zuluft (ZU) in einem vom Wärmeträgerfluid in einer Strömungsrichtung (z) durchströmten Lufterhitzer (230) abhängig von einem zweiten Temperaturparameter (T2) auf eine zweite Temperatur ($t_{GA}$) erwärmt wird, wobei die zweite Temperatur ($t_{GA}$) im ersten Heizbetrieb über einer Raumsolltemperatur ($t_{Rsoll}$) zu einer Beheizung eines Raums liegt.

10. Verfahren nach Anspruch 9, enthaltend die Verfahrensschritte, dass die Vorlauftemperatur (tv) von einem Regler (4) durch Einstellung einer Wärmeträgerleistung des strömenden Wärmeträgerfluids vorgegeben ist, wobei die Wärmeträgerleistung abhängig von der Vorlauftemperatur (tv) und einer vom Regler (4) vorgegeben Pumpenleistung einer Pumpe (720, 620) und/oder Heizleistung des Kältemittelkreislaufs ist.

11. Verfahren nach einem der vorhergehenden Ansprüche 9 oder 10, enthaltend den Verfahrensschritt, dass die Heizleistung des Kältemittelkreislaufs (100) durch eine vom Regler (4) vorgegebene Drehzahl für einen Verdichter (110), insbesondere abhängig vom ersten Temperaturparameter (T1), vorgegeben wird.

12. Verfahren nach einem der vorhergehenden Ansprüche 9 bis 11, enthaltend die Verfahrensschritte, dass die zweite Temperatur ($t_{GA}$) der Zuluft (ZU) vom Regler (4) abhängig von einer Differenz aus einer ermittelten Vorlauftemperatur (tv) mit einer Auslauftemperatur (tAl) des Wärmeträgerfluids aus dem Lufterhitzer (230), einer Eintrittstemperatur ($t_{Ge}$) von Luft in den Lufterhitzer (230) und abhängig von einem Luftvolumenstrom der Zuluft (ZU) bestimmt wird, womit vom Regler (4) insbesondere die Pumpenleistung der Pumpe (620, 720) geregelt wird.

13. Verfahren nach einem der vorhergehenden Ansprüche 9 bis 12, enthaltend die Verfahrensschritte, dass die Pumpendrehzahl der Ladepumpe (720) und/oder die Leistung des Kältemittelkreislaufs so eingestellt wird/werden, dass das Wärmeträgermedium die Vorlauftemperatur (tv) erreicht, wobei die Wärmeleistung insbesondere im Zusammenspiel der Pumpenleistung der Pumpe (720, 620) mit der Heizleistung des Kältemittelkreislaufs vom Regler (4) vorgegeben wird.

14. Verfahren nach einem der vorhergehenden Ansprüche 9 bis 13 ,
enthaltend die Verfahrensschritte,
dass Außenluft (AU) im ersten Heizbetrieb, bei Temperaturen der Außenluft ($t_{AU}$) unter dem Gefrierpunkt, mit einem Vorheizer (270) durch Wärmeaustausch mit dem Wärmeträgerfluid auf eine Mindesttemperatur ($t_M$) gebracht wird, die vorerwärmte Außenluft nach dem Vorheizer (270) mit der Mindesttemperatur ($t_M$) einem Luft/Luft-Wärmeaustauscher (200) zugeführt wird, ein gemessener Mindesttemperaturwert ($t_{Mm}$), der in Strömungsrichtung (x) hinter dem Vorheizer (270) der strömenden Außenluft AU ermittelt wird, dem Regler zugeführt wird, der Vorheizer (270) abhängig von der Außentemperatur ($t_{Au}$) aktiviert wird und abhängig von der gemessenen Mindesttemperatur ($t_{Mm}$) insbesondere eine Wärmeleistung eingestellt wird.

15. Verfahren nach einem der Ansprüche 9 bis 14,
enthaltend die Verfahrensschritte,
dass die Außenluft (AU) nach dem Vorheizer (270) mit einer Mindesttemperatur ($t_M$) von wenigstens zwischen -5 °C und +3 °C, insbesondere ca. 1 °C dem Luft/Luft-Wärmeaustauscher (200) zugeführt wird, wobei die Außenluft (AU) durch Austausch mit Wärmeenergie einer Abluft (AB) auf eine Temperatur zwischen ca. 12 °C bis 25°C angehoben wird.

16. Verfahren nach einem der Ansprüche 9 bis 15,
enthaltend die Verfahrensschritte,
dass die Außenluft (AU), mit Temperaturen zwischen 12 °C bis 25 °C, in Strömungsrichtung (x) der Außenluft (AU) nach dem Luft/Luft-Wärmeaustauscher (200) einem Lufterhitzer (230) zugeführt wird, wobei die Außenluft (AU) im Lufterhitzter (230) insbesondere abhängig vom zweiten Temperaturparameter (T2) auf eine Temperatur zwischen 25 °C und 60 °C erhitzt wird, die über der Raumtemperatur ($t_R$) liegt, insbesondere auf Temperaturen zwischen 30 °C und 50 °C entsprechend einer vorzugsweise linearen Abhängigkeit vom zweiten Temperaturparameter (T2).

17. Verfahren nach einem der vorhergehenden Ansprüche 9 bis 16,
enthaltend die Verfahrensschritte,
dass das Wärmeträgerfluid zunächst in einem Gaskühler (170) auf die Vorlauftemperatur (tv) gebracht wird und dann einem Pufferspeicher (610) mit einem Formfaktor vom Durchmesser zur Höhe von kleiner 0,25, insbesondere kleiner 0,18 zugeführt wird.

18. Verfahren nach einem der vorhergehenden Ansprüche 9 bis 17,
enthaltend die Verfahrensschritte,
dass der Pufferspeicher (610) schichtend mit einem ersten Massenstrom aus einer primären Vorlaufleitung (701) geladen wird, wobei ein zweiter Massenstrom über einen oberen Austritt (6112) in eine Fluidleitung (612) zu einem Wärmeträgerkreislauf (600) geführt ist, so dass eine bedarfsgerechte Strömungsaufteilung des Wärmeträgermediums mit der Vorlauftemperatur (tv) zwischen dem Pufferspeicher (610) und dem Wärmeträgerkreislauf (600) vorgesehen ist.

19. Verfahren nach einem der vorhergehenden Ansprüche 9 bis 18,
enthaltend den Verfahrensschritt,
dass die Außenluft (AU), soweit sie Temperaturen nahe oder unter dem Gefrierpunkt aufweist, insbesondere Temperaturen unter 1° C, in einem Vorheizer (270) auf wenigstens ca. 1 ° C erhitzt wird, zumindest aber auf eine Temperatur von -4 °C bis +1 °C, dann in einem Luft/Luft-Wärmetauscher von aus einem Gebäude heraus strömender Abluft weiter auf ca. 12 °C bis 25 °C erwärmt wird und danach in den Lufterhitzer (230) strömt, wo die Luft von ca. 12 °C bis 25 °C auf vorzugsweise bis auf unter 60 °C, insbesondere 30 °C bis 50 °C erwärmt wird und die Luft als Zuluft (ZU) zumindest in einen Raum oder ein Gebäude einströmt und mit der erwärmten Zuluft (ZU) von bis zu insbesondere 50 °C der Raum und das Gebäude beheizt werden.

20. Verfahren nach einem der Ansprüche 9 bis 19 zum Betrieb eines Lüftungsheizgerätes (1) mit Wärmerückgewinnung, in dem Außenluft (AU) über einen Luft/Luft-Wärmeübertrager (200) geführt wird, die Außenluft (AU) im Wärmeübertrager (200) Wärme von einer Abluft (AB) aufnimmt, aus dem Luft/Luft-Wärmeübertrager (200) Fortluft (FO) als Wärmequelle auf einen Verdampfer (160) einer Wärmepumpe geleitet ist, um ein in einem Kältemittelkreislauf (100) enthaltenes Kältemittel zu verdampfen, und zur Fortluft (FO) Außenluft (AU) für einen ausreichenden Energieinhalt beigemischt werden kann, **gekennzeichnet durch** die Verfahrensschritte,

   - dass die vom Luft/Luft-Wärmeübertrager (200) erwärmte Zuluft (ZU) mit einer ersten Temperatur ($t_{Ge}$) von ca. 15 - 20 °C in einem Lufterhitzer (230) auf eine zweite Temperatur ($t_{GA}$) erwärmt wird, die über einer Temperatur ($t_{AB}$) der Abluft (AB) liegt,
   - in einem Gaskühler (170) eines Wärmeaustauschers (171) $CO_2$ als Kältemittel in einem überkritischen Zustand Wärme an ein Wärmeträgermedium abgibt,
   - im Gaskühler (170) das Kältemittel von einem ersten Zustand mit einer ersten Temperatur ($t_{Üe}$), die überkritisch ist, auf einen zweiten Zustand mit einer zweiten Temperatur ($t_{Üa}$) bei einem nahezu isobaren Druck, der zwischen ca. 73,8 bar und 90 bar liegt, abgekühlt wird,
   - dass das $CO_2$ in seiner Strömungsrichtung (c) vor dem Verdampfer (160) durch eine Drossel (150) auf einen Druck unterhalb von 73 bar expandiert wird und
   - dass das Wärmeträgermedium in dem Lufterhitzer (230) Wärme an die Zuluft (ZU) abgibt.

21. Wärmepumpenanlage (1), nach einem der vorhergehenden Ansprüche 1 bis 8,
wobei der Luft/Luft-Wärmeübertrager (200) zur Übertragung von Wärmeenergie aus einem Abluftstrom (AB) aus zu beheizenden Räumen auf einen Außenluftstrom (AU) dient, mit einem Kältemittelkreislauf (100) mit einem Verdampfer (160), der mit einem Fortluftstrom (FO) aus einem Fortluftkanal (250) beaufschlagbar ist, mit einer Öffnung (161) für Außenluft vor dem Verdampfer (160), durch die die Außenluft (AU) in die Fortluft (FO) für einen ausreichenden Energieinhalt als Wärmequelle beigemischt werden kann,

   - wobei der Gaskühler (170) des Kältemittelkreislaufs (100) in einem Wärmeträgermittelkreislauf angeordnet ist, der einen Lufterhitzer (230) aufweist, der in einem Zuluftkanal (220) angeordnet ist,
   - der Lufterhitzer (230) in Luftströmungsrichtung (x) einer Zuluft (ZU) hinter dem Luft/Luft-Wärmeübertrager (200) angeordnet ist,
   - im Kältemittelkreislauf $CO_2$ als Kältemittel enthalten ist
   - und Wärme vom überkritischen $CO_2$ als Kältemittel erst auf das Wärmeträgermedium im Wärmeträgerkreislauf und dann im Lufterhitzer (230) auf die Zuluft (ZU) hinter dem Luft/Luft-Wärmeübertrager (200) übertragen wird.

**Claims**

1. Heat pump system (1) with

   a refrigerant circuit (100) for heat generation and with a gas cooler (170),
   an air/air heat exchanger (200),
   a DHW cylinder (300),
   a buffer cylinder (610),
   a charging circuit (700) with a primary flow line (701) and a return line (730) and a three-way valve (710), where a heat transfer medium can flow in the charging circuit (700), where DHW heating or the heating/cooling of rooms can take place via the three-way valve (710),
where the gas cooler (170) in the refrigerant circuit (100) is linked to the primary flow line (701), where in a flow direction (x) of outdoor air into the heat pump system (1) there is first a preheater (270) suitable for preheating outdoor air (AU) to a minimum temperature ($t_M$) in line with demand,
in the flow direction downstream of the preheater (270), there is an air/air heat exchanger (200) suitable for heating the outdoor air by means of extract air with the substances being kept separate,
in the flow direction (x) downstream of the air/air heat exchanger (200) there is an air heater (230) as a heat transfer medium/air heater suitable for temperate heating of the outdoor air to a supply air temperature ($t_{GA}$),
where firstly the air heater (230), which is also connected to a supply air duct (220) and a supply air connection (240), is connected to the buffer cylinder (610) via a fluid line (612) in a flow direction (z) of the heat transfer medium, and where the preheater (270) is connected to the buffer cylinder (610) further downstream in the flow direction (z) of the heat transfer medium.

2. Heat pump system (1) according to claim 1, **characterised in that** the preheater (270) has an outdoor air connection (260) and the air heater (230) is connected to a building connection/supply air connection.

3. Heat pump system (1) according to claim 2, **characterised in that** the air/air heat exchanger (200) has an extract air duct (210) for extract air (AB), a supply air duct (220) for supply air (ZU), an exhaust air duct (250) for exhaust air (FO), where the air/air heat exchanger (200) is preferably equipped in such a way that the exhaust air (FO), driven by an exhaust air fan (251), can flow in countercurrent to the outdoor air flow (AU), driven by a supply air fan (221).

4. Heat pump system (1) according to one of the preceding claims,
   **characterised in that**

   the primary flow line (701) is connected via a first inlet (6111) of the buffer cylinder (610) to a first buffer pipe (6110) which leads through an upper zone (Zo) of the buffer cylinder (610), where the first buffer pipe (6110) has at least a first pipe opening (6113), the return line (730) is connected via a second outlet (6122) to a second buffer pipe (6120),
   where the second buffer pipe (6120) is guided through a lower zone (Zu) of the buffer cylinder (610) and the second buffer pipe (6120) has at least a second pipe opening (6123).

5. Heat pump system (1) according to claim 4,
   **characterised in that**
   the buffer cylinder (610) has an internal ratio between a diameter (D) and a height (H) of less than 0.25, in particular, less than approximately 0.15.

6. Heat pump system (1) according to claim 5, with a buffer cylinder that has a volume for receiving a heat transfer medium, with a height (H), with a diameter (D), with at least one inlet (6111, 6121) and at least one outlet (6112, 6122),
   **characterised in that**
   the buffer cylinder (610) has an internal ratio between the diameter (D) and a height (H) of less than 0.4 or less than 0.2, in particular, ratios between 0.07 and 0.1, or approximately 0.1 to 0.2.

7. Heat pump system according to claim 6,

   **characterised in that** the buffer cylinder (610) comprises a cylinder wall (6140) between an upper dished bottom (6130) and a lower dished bottom (6150), where an upper buffer pipe (6110) passes through the cylinder wall (6140) below the upper dished bottom (6130), and
   a lower buffer pipe (6120) passes through the cylinder wall (6140) above the lower dished bottom (6150).

8. Heat pump system according to claim 6 or 7,
   **characterised in that** at least one buffer pipe (6110, 6120) has at least one opening (6113, 6123), in particular a slot, and **in that** the buffer pipe (6110, 6120) is directed towards a dished bottom (6130, 6150).

9. A method for operating a heat pump system (1) which is equipped with a refrigerant circuit (100) for heat generation and with a gas cooler (170), an air/air heat exchanger (200),

   a DHW cylinder (300), a buffer cylinder (610), a charging circuit (700) with a primary flow line (701) and a return line (730) and a three-way valve (710), where a heat transfer medium can flow in the charging circuit (700), where DHW heating or the heating/cooling of rooms can take place via the three-way valve (710), where the gas cooler (170) in the refrigerant circuit (100) is linked to the primary flow line (701),
where in a flow direction (x) of outdoor air into the heat pump system (1) there is first a preheater (270) suitable for preheating outdoor air (AU) to a minimum temperature ($t_M$) in line with demand,
where in the flow direction downstream of the preheater (270), there is an air/air heat exchanger (200) suitable for heating the outdoor air by means of extract air with the substances being kept separate,
where in the flow direction (x) downstream of the air/air heat exchanger (200), there is an air heater (230) as a heat transfer medium/air heater suitable for temperate heating of the outdoor air to a supply air temperature ($t_{GA}$),
where, in a first heating operation, a buffer cylinder (610) is brought to a flow temperature (tv) with a heat transfer fluid which is tempered by a refrigerant circuit (100) and is pumped around in a flow direction (y) by means of a charging pump (720),
including the method steps
that the heat transfer fluid is heated to the flow temperature (tv) in the first heating operation by setting a heating output of the refrigerant circuit (100) of the heat pump system (1) dependent on a first temperature parameter (T1), where in an air heater (230), through which the heat transfer fluid flows in a flow direction (z), supply air (ZU) is heated to a second temperature ($t_{GA}$) dependent on a second temperature parameter (T2), where in the first heating operation the second temperature ($t_{GA}$) lies above a set room temperature ($t_{Rsoll}$) for heating a room.

10. A method according to claim 9, including the method steps that the flow temperature (tv) is predetermined by a controller (4) by setting a heat transfer output of the flowing heat transfer fluid, where the heat transfer output is dependent on the flow temperature (tv) and a pump rate of a pump (720, 620) and/or heating output of the refrigerant circuit predetermined by the controller (4).

11. A method according to one of the preceding claims 9 or 10, including the method steps that the heating output of the refrigerant circuit (100) is predetermined by a compressor speed (110) set by the controller (4), in particular dependent on the first temperature parameter (T1).

12. A method according to one of the preceding claims 9 to 11, including the method steps that the second temperature ($t_{GA}$) of the supply air (ZU) is set by the controller (4) dependent on the function of a difference between a determined flow temperature (tv) and an outlet temperature (tAl) of the heat transfer fluid from the air heater (230), an inlet temperature ($t_{Ge}$) of air into the air heater (230) and dependent on an air flow rate of the supply air (ZU) where, in particular, the pump rate of the pump (620, 720) is controlled by the controller (4).

13. A method according to one of the preceding claims 9 to 12, including the method steps that the speed of the charging pump (720) and/or the output of the refrigerant circuit is/are set in such a way that the heat transfer medium reaches the flow temperature (tv), where the heating output is set by the controller (4), in particular in the interaction of the pump rate of the pump (720, 620) with the heating output of the refrigerant circuit.

14. A method according to one of the preceding claims 9 to 13,
including the method steps
that, at temperatures of the outdoor air ($t_{AU}$) below freezing, outdoor air (AU) is brought to a minimum temperature ($t_M$) in the first heating operation by means of a preheater (270) through heat exchange with the heat transfer fluid, the preheated outdoor air is fed to an air/air heat exchanger (200) downstream of the preheater (270) at the minimum temperature ($t_M$), a minimum temperature value ($t_{Mm}$), measured in the flow direction (x) downstream of the preheater (270) of the flowing outdoor air AU, is fed to the controller, the preheater (270) is activated dependent on the outdoor temperature ($t_{Au}$), and a heating output, in particular, is set dependent on the minimum temperature ($t_{Mm}$) measured.

15. A method according to one of the claims 9 to 14,
including the method steps
that the outdoor air (AU) is fed to the air/air heat exchanger (200) downstream of the preheater (270) at a minimum temperature ($t_M$) of at least between -5 °C and +3 °C, in particular approximately 1 °C, where the outdoor air (AU) is raised to a temperature of between about 12 °C and 25 °C by being replaced with thermal energy of extract air (AB).

16. A method according to one of claims 9 to 15,
including the method steps
that the outdoor air (AU), at temperatures between 12 °C to 25 °C, is fed to an air heater (230) in the flow direction (x) of the outdoor air (AU) downstream of the air/air heat exchanger (200), where the outdoor air (AU) is heated in the air heater (230), in particular dependent on the second temperature parameter (T2), to a temperature between 25 °C and 60 °C which is above the room temperature ($t_R$), in particular to temperatures between 30 °C and 50 °C in accordance with a preferably linear dependence on the second temperature parameter (T2).

**17.** A method according to one of the preceding claims 9 to 16,
comprising the method steps
that the heat transfer fluid is first brought to the flow temperature (tv) in a gas cooler (170) and is then fed to a buffer cylinder (610) with a form factor of diameter in relation to height of less than 0.25, in particular less than 0.18.

**18.** A method according to one of the preceding claims 9 to 17,
including the method steps
that the buffer cylinder (610) is charged in layers with a first mass flow rate from a primary flow line (701), where a second mass flow rate is fed via an upper outlet (6112) into a fluid line (612) to a heat transfer circuit (600) in such a way that there is a flow distribution of the heat transfer medium with the flow temperature (tv) between the buffer cylinder (610) and the heat transfer circuit (600) in line with demand.

**19.** A method according to one of the preceding claims 9 to 18,
including the method step
that the outdoor air (AU), insofar as it comprises temperatures close to or below freezing, in particular temperatures below 1 °C, is heated in a preheater (270) to a minimum of approximately 1 °C, but at least to a temperature of -4 °C to +1 °C, then further heated in an air/air heat exchanger by extract air flowing out of a building to approximately 12 °C to 25 °C and then flows into the air heater (230), where the air is heated from approximately 12 °C to 25 °C to preferably below 60 °C, in particular 30 °C to 50 °C, and the air flows as supply air (ZU) at least into a room or a building, and the room and the building are heated with the heated supply air (ZU) to temperatures of up to, in particular, 50 °C.

**20.** A method according to one of the claims 9 to 19 for operating a ventilation heating unit (1) with heat recovery, in which outdoor air (AU) is passed over an air/air heat exchanger (200), the outdoor air (AU) absorbs heat from extract air (AB) in the heat exchanger (200), exhaust air (FO) is fed from the air/air heat exchanger (200) as a heat source to an evaporator (160) of a heat pump to evaporate a refrigerant contained in a refrigerant circuit (100), and outdoor air (AU) can be admixed with the exhaust air (FO) for sufficient energy content, **characterised by**
the method steps

- that the supply air (ZU) heated by the air/air heat exchanger (200) at a first temperature ($t_{Ge}$) of approximately 15 - 20 °C is heated in an air heater (230) to a second temperature ($t_{GA}$) that is above a temperature ($t_{AB}$) of the extract air (AB),
- in a gas cooler (170) of a heat exchanger (171), $CO_2$ as refrigerant in a supercritical state gives off heat to a heat transfer medium,
- in the gas cooler (170) the refrigerant is cooled from a first state with a first temperature ($t_{Üe}$), which is supercritical, to a second state with a second temperature ($t_{Üa}$) at an almost isobaric pressure between approximately 73.8 bar and 90 bar,
- that the $CO_2$ is expanded in its flow direction (c) upstream of the evaporator (160) by a throttle (150) to a pressure below 73 bar and
- that the heat transfer medium in the air heater (230) gives off heat to the supply air (ZU).

**21.** Heat pump system (1) according to one of the preceding claims 1 to 8,

where the air/air heat exchanger (200) is used to transfer thermal energy from an extract air flow (AB) from rooms that are to be heated to an outdoor air flow (AU), with
a refrigerant circuit (100) with an evaporator (160) that can be supplied with an exhaust air flow (FO) from an exhaust air duct (250), with an opening (161) for outdoor air upstream of the evaporator (160) through which the outdoor air (AU) can be admixed into the exhaust air (FO) for sufficient energy content to act as a heat source,

- where there is a gas cooler (170) of the refrigerant circuit (100) arranged in a heat transfer medium circuit comprising an air heater (230) arranged in a supply air duct (220),
- the air heater (230) is arranged downstream of the air/air heat exchanger (200) in the air flow direction (x) of the supply air (ZU),
- $CO_2$ is contained as a refrigerant in the refrigerant circuit

- and heat from the supercritical $CO_2$ as refrigerant is first transferred to the heat transfer medium in the heat transfer circuit and then in the air heater (230) to the supply air (ZU) downstream of the air/air heat exchanger (200).

## Revendications

1. Installation de pompe à chaleur (1) comprenant :

   un circuit frigorifique (100) destiné à produire de la chaleur et doté d'un refroidisseur de gaz (170),
   un échangeur de chaleur air-air (200),
   un réservoir d'eau chaude (300),
   un ballon tampon (610),
   un circuit de charge (700) doté d'une conduite primaire de départ (701), d'une conduite de retour (730) et d'une soupape à trois voies (710), un agent caloporteur pouvant circuler dans le circuit de charge (700), la soupape à trois voies (710) permettant d'effectuer la préparation d'eau chaude ou un chauffage/refroidissement de pièces, le refroidisseur de gaz (170) du circuit frigorifique (100) étant couplé à la conduite primaire de départ (701), en sachant qu'il se trouve tout d'abord, dans le sens de l'écoulement (x) de l'air extérieur entrant dans l'installation de pompe à chaleur (1), un dispositif de préchauffage (270) conçu pour préchauffer, conformément aux besoins, de l'air extérieur (AU) à une valeur de température minimale ($t_M$),
   en aval du dispositif de préchauffage (270), dans le sens de l'écoulement, il est prévu l'échangeur de chaleur air-air (200), conçu pour chauffer de manière séparée matériellement l'air extérieur au moyen d'air extrait,
   en aval de l'échangeur de chaleur air-air (200), dans le sens de l'écoulement (x), il est prévu un réchauffeur d'air (230) servant de réchauffeur d'agent caloporteur/d'air, ledit réchauffeur d'air étant conçu pour réguler la température de l'air extérieur à une température d'air entrant ($t_{GA}$),
   en sachant que l'on trouve tout d'abord, dans le sens de l'écoulement (z) de l'agent caloporteur, le raccordement du réchauffeur d'air (230) au ballon tampon (610) par le biais d'une conduite de fluide (612), ledit réchauffeur d'air étant également raccordé à un canal d'air entrant (220) et à un raccord pour air entrant (240), et que l'on trouve ensuite, dans le sens de l'écoulement (z) de l'agent caloporteur, le raccordement du dispositif de préchauffage (270) au ballon tampon (610).

2. Installation de pompe à chaleur (1) selon la revendication 1, **caractérisée en ce que** le dispositif de préchauffage (270) présente un raccord pour air extérieur (260) et le réchauffeur d'air (230) est relié à un raccord de bâtiment/raccord pour air entrant.

3. Installation de pompe à chaleur (1) selon la revendication 2, **caractérisée en ce que** l'échangeur de chaleur air-air (200) présente un canal d'air extrait (210) pour l'air extrait (AB), un canal d'air entrant (220) pour l'air entrant (ZU), un canal d'air rejeté (250) pour l'air rejeté (FO), l'échangeur de chaleur air-air (200) étant de préférence équipé de telle manière que l'air rejeté (FO) peut s'écouler, entraîné par un ventilateur à air rejeté (251), à contre-courant de l'écoulement d'air extérieur (AU) entraîné par un ventilateur à air entrant (221).

4. Installation de pompe à chaleur (1) selon l'une quelconque des revendications précédentes, **caractérisée en ce que**

   la conduite primaire de départ (701) est raccordée, par le biais d'une première entrée (6111) du ballon tampon (610), à un premier tuyau tampon (6110) traversant une zone supérieure (Zo) du ballon tampon (610) dans laquelle le premier tuyau tampon (6110) présente au moins une première ouverture de tuyau (6113), la conduite de retour (730) est raccordée à un second tuyau tampon (6120) par le biais d'une seconde sortie (6122), le second tuyau tampon (6120) traversant une zone inférieure (Zu) du ballon tampon (610) et le second tuyau tampon (6120) présentant au moins une seconde ouverture de tuyau (6123).

5. Installation de pompe à chaleur (1) selon la revendication 4, **caractérisée en ce que**
   l'intérieur du ballon tampon (610) présente un rapport entre diamètre (D) et hauteur (H) inférieur à 0,25, en particulier inférieur à environ 0,15.

6. Installation de pompe à chaleur (1) selon la revendication 5, comprenant un ballon tampon qui présente un volume destiné à recevoir un agent caloporteur, avec une hauteur (H), un diamètre (D), au moins une entrée (6111, 6121) et au moins une sortie (6112, 6122),

**caractérisée en ce que**

l'intérieur du ballon tampon (610) présente un rapport entre diamètre (D) et hauteur (H) inférieur à 0,4 ou inférieur à 0,2, en particulier des rapports compris entre 0,07 et 0,1 ou environ 0,1 à 0,2.

7. Installation de pompe à chaleur selon la revendication 6,

   **caractérisée en ce que** le ballon tampon (610) présente une paroi de réservoir (6140) entre un fond bombé supérieur (6130) et un fond bombé inférieur (6150), un tuyau tampon supérieur (6110) traversant la paroi de réservoir (6140) en dessous du fond bombé supérieur (6130) et
   un tuyau tampon inférieur (6120) traversant la paroi de réservoir (6140) au-dessus du fond bombé inférieur (6150).

8. Installation de pompe à chaleur selon la revendication 6 ou 7,
   **caractérisée en ce qu'**au moins un tuyau tampon (6110, 6120) présente au moins une ouverture (6113, 6123), en particulier une fente, et **en ce que** le tuyau tampon (6110, 6120) est orienté vers un fond bombé (6130, 6150) qui présente au moins une ouverture (6113, 6123).

9. Procédé de fonctionnement d'une installation de pompe à chaleur (1) qui comprend

   un circuit frigorifique (100) destiné à produire de la chaleur et doté d'un refroidisseur de gaz (170), un échangeur de chaleur air-air (200),
   un réservoir d'eau chaude (300), un ballon tampon (610), un circuit de charge (700) doté d'une conduite primaire de départ (701), d'une conduite de retour (730) et d'une soupape à trois voies (710), un agent caloporteur pouvant circuler dans le circuit de charge (700), la soupape à trois voies (710) permettant d'effectuer la préparation d'eau chaude ou un chauffage/refroidissement de pièces, le refroidisseur de gaz (170) du circuit frigorifique (100) étant couplé à la conduite primaire de départ (701),
   dans lequel il se trouve tout d'abord, dans le sens de l'écoulement (x) de l'air extérieur entrant dans l'installation de pompe à chaleur (1), un dispositif de préchauffage (270) conçu pour préchauffer, conformément aux besoins, de l'air extérieur (AU) à une valeur de température minimale ($t_M$),
   dans lequel, en aval du dispositif de préchauffage (270), dans le sens de l'écoulement, il est prévu l'échangeur de chaleur air-air (200), conçu pour chauffer de manière séparée matériellement l'air extérieur au moyen d'air extrait,
   dans lequel, en aval de l'échangeur de chaleur air-air (200), dans le sens de l'écoulement (x), il est prévu un réchauffeur d'air (230) servant de réchauffeur d'agent caloporteur/d'air, ledit réchauffeur d'air étant conçu pour réguler la température de l'air extérieur à une température d'air entrant ($t_{GA}$),
   un ballon tampon (610) avec un fluide caloporteur régulé en température par un circuit frigorifique (100) étant amené à une température départ (tv) dans un premier mode de chauffage, ledit fluide caloporteur étant pompé dans un sens d'écoulement (y) au moyen d'une pompe de chargement (720),
   comportant les étapes de procédé selon lesquelles
   le fluide caloporteur est chauffé, dans le premier mode de chauffage, à la température départ (tv) grâce au réglage d'une puissance de chauffe du circuit frigorifique (100) de l'installation de pompe à chaleur (1) en fonction d'un premier paramètre de température (T1),
   de l'air entrant (ZU) étant chauffé à une seconde température ($t_{GA}$), en fonction d'un second paramètre de température (T2), dans un réchauffeur d'air (230) dans lequel circule le fluide caloporteur dans un sens d'écoulement (z), la seconde température ($t_{GA}$) étant, dans le premier mode de chauffage, supérieure à une température ambiante de consigne ($t_{Rsoll}$) pour le chauffage d'une pièce.

10. Procédé selon la revendication 9, comportant les étapes de procédé selon lesquelles la température départ (tv) est définie au moyen d'un régulateur (4) par le réglage de la capacité caloporteuse du fluide caloporteur s'écoulant, la capacité caloporteuse dépendant de la température départ (tv) ainsi que de la puissance de circulation d'une pompe (720, 620) et/ou de la puissance de chauffe du circuit frigorifique définies par le régulateur (4).

11. Procédé selon l'une des revendications précédentes 9 ou 10, comportant l'étape de procédé selon lesquelles la puissance de chauffe du circuit frigorifique (100) est définie par une vitesse de rotation définie par le régulateur (4) pour un compresseur (110), en particulier en fonction du premier paramètre de température (T1).

12. Procédé selon l'une des revendications précédentes 9 à 11, comportant les étapes de procédé selon lesquelles la seconde température ($t_{GA}$) de l'air entrant (ZU) est déterminée par le régulateur (4) en fonction d'une différence entre une température départ (tv) déterminée et une température de sortie (tAI) du fluide caloporteur sortant du réchauffeur d'air (230), d'une température d'entrée ($t_{Ge}$) de l'air dans le réchauffeur d'air (230) et en fonction d'un débit volumétrique de l'air entrant (ZU), moyennant quoi le régulateur (4) règle en particulier la puissance de circulation de la pompe (620, 720).

13. Procédé selon l'une des revendications précédentes 9 à 12, comportant les étapes de procédé selon lesquelles la vitesse de rotation de la pompe de chargement (720) et/ou la puissance du circuit frigorifique est/sont réglées de telle manière que l'agent caloporteur atteint la température départ (tv), la puissance calorifique étant définie par le régulateur (4) en particulier avec la puissance de circulation de la pompe (720, 620) combinée à la puissance de chauffe du circuit frigorifique.

14. Procédé selon de l'une des revendications précédentes 9 à 13,
comportant les étapes de procédé selon lesquelles
dans le cas de températures de l'air extérieur ($t_{AU}$) au-dessous de zéro, l'air extérieur (AU) est amené, dans un premier mode de chauffage, à une température minimale ($t_M$) au moyen d'un dispositif de préchauffage (270) par échange de chaleur avec le fluide caloporteur, l'air extérieur préchauffé à la température minimale ($t_M$) est introduit, en aval du dispositif de préchauffage (270), dans un échangeur de chaleur air-air (200), une valeur de température minimale mesurée ($t_{Mm}$), qui est déterminée, dans le sens de l'écoulement (x), en aval du dispositif de préchauffage (270) de l'air extérieur AU en circulation, étant transmise au régulateur, le dispositif de préchauffage (270) étant activé en fonction de la température extérieure ($t_{Au}$) et une puissance calorifique étant en particulier réglée en fonction de la température minimale mesurée ($t_{Mm}$).

15. Procédé selon l'une des revendications 9 à 14,
comportant les étapes de procédé selon lesquelles
l'air extérieur (AU), en aval du dispositif de préchauffage (270), est introduit dans l'échangeur de chaleur air-air (200) à une température minimale ($t_M$) d'au moins -5 °C à +3 °C, en particulier d'environ 1 °C, l'air extérieur (AU) étant élevé à une température comprise entre environ 12 °C et 25 °C par échange avec l'énergie thermique de l'air extrait (AB).

16. Procédé selon l'une des revendications 9 à 15,
comportant les étapes de procédé selon lesquelles
l'air extérieur (AU), à des températures comprises entre 12 °C et 25 °C, est introduit, en aval de l'échangeur de chaleur air-air (200), vu dans le sens de l'écoulement (x) de l'air extérieur (AU), dans un réchauffeur d'air (230), l'air extérieur (AU) étant chauffé dans le réchauffeur d'air (230), en particulier en fonction du second paramètre de température (T2), à une température comprise entre 25 °C et 60 °C qui est supérieure à la température ambiante ($t_R$), en particulier à des températures comprises entre 30 °C et 50 °C conformément à une dépendance de préférence linéaire au second paramètre de température (T2).

17. Procédé selon l'une des revendications précédentes 9 à 16,
comportant les étapes de procédé selon lesquelles
le fluide caloporteur est d'abord amené à la température départ (tv) dans un refroidisseur de gaz (170) et ensuite introduit dans un ballon tampon (610) ayant un facteur de forme du diamètre par rapport à la hauteur inférieur à 0,25, en particulier inférieur à 0,18.

18. Procédé selon l'une des revendications précédentes 9 à 17,
comportant les étapes de procédé selon lesquelles
le ballon tampon (610) est chargé par couches avec un premier débit massique provenant d'une conduite primaire de départ (701), un second débit massique étant guidé, par le biais d'une sortie supérieure (6112), dans une conduite de fluide (612) jusqu'à un circuit de fluide caloporteur (600), de telle sorte qu'une répartition de l'écoulement de l'agent caloporteur à la température départ (tv) est prévue selon les besoins entre le ballon tampon (610) et le circuit de fluide caloporteur (600).

19. Procédé selon l'une des revendications précédentes 9 à 18,
comportant les étapes de procédé selon lesquelles
l'air extérieur (AU), dans la mesure où il présente des températures proches ou au-dessous de zéro, en particulier des températures inférieures à 1 °C, est chauffé dans un dispositif de préchauffage (270) à au moins environ 1 °C, tout du moins à une température comprise entre -4 °C et +1 °C, puis est chauffé davantage pour atteindre entre environ 12 °C et 25 °C dans un échangeur de chaleur air-air par de l'air extrait s'écoulant hors d'un bâtiment, et s'écoule ensuite dans le réchauffeur d'air (230), dans lequel l'air d'une température d'environ 12 °C à 25 °C est porté de préférence à moins de 60 °C, en particulier entre 30 °C et 50 °C, et l'air pénètre au moins dans une pièce ou un bâtiment en tant qu'air entrant (ZU) et la pièce et le bâtiment sont chauffés avec l'air entrant (ZU) chauffé ayant une température s'élevant, en particulier, à 50 °C ou moins.

20. Procédé selon l'une des revendications 9 à 19 pour le fonctionnement d'un appareil de chauffage et ventilation (1) avec récupération de chaleur, dans lequel de l'air extérieur (AU) passe par un échangeur de chaleur air-air (200) ; l'air extérieur (AU) absorbe, dans l'échangeur de chaleur (200), de la chaleur provenant d'air extrait (AB) ; de l'air rejeté (FO) servant de source de chaleur est guidé hors de l'échangeur de chaleur air-air (200) vers un évaporateur (160) d'une pompe à chaleur pour faire s'évaporer un fluide frigorigène se trouvant dans un circuit frigorifique (100), et de l'air extérieur (AU) pouvant être mélangé à l'air rejeté (FO) pour obtenir un contenu énergétique suffisant, **caractérisé par** les étapes de procédé selon lesquelles

    - l'air entrant (ZU) chauffé par l'échangeur de chaleur air-air (200) à une première température ($t_{Ge}$) d'environ 15 à 20 °C est chauffé dans un réchauffeur d'air (230) à une seconde température ($t_{GA}$) qui est supérieure à une température ($t_{AB}$) de l'air extrait (AB),
    - dans un refroidisseur de gaz (170) d'un échangeur de chaleur (171), du $CO_2$ servant de fluide frigorigène dans un état supercritique transfère de la chaleur à un agent caloporteur,
    - dans le refroidisseur de gaz (170), le fluide frigorigène est refroidi pour passer d'un premier état avec une première température ($t_{üe}$) qui est supercritique, à un second état avec une seconde température ($t_{üa}$) à une pression presque isobare qui est comprise entre environ 73,8 bar et 90 bar,
    - le $CO_2$ est dilaté dans son sens d'écoulement (c) en amont de l'évaporateur (160) par un restricteur (150) à une pression inférieure à 73 bar et
    - l'agent caloporteur transfère, dans le réchauffeur d'air (230), de la chaleur à l'air entrant (ZU).

21. Installation de pompe à chaleur (1) selon l'une des revendications précédentes 1 à 8,

dans laquelle l'échangeur de chaleur air-air (200) sert à transmettre de l'énergie thermique provenant d'un flux d'air extrait (AB) de pièces à chauffer à un flux d'air extérieur (AU), et comportant
un circuit frigorifique (100) doté d'un évaporateur (160) qui peut être soumis à l'action d'un flux d'air rejeté (FO) provenant d'un canal d'air rejeté (250), d'une ouverture (161) pour air extérieur en amont de l'évaporateur (160), par laquelle l'air extérieur (AU) peut être mélangé à l'air rejeté (FO) pour obtenir un contenu énergétique suffisant pour servir de source de chaleur,

    - le refroidisseur de gaz (170) du circuit frigorifique (100) étant disposé dans un circuit d'agent caloporteur qui présente un réchauffeur d'air (230) disposé dans un canal d'air entrant (220),
    - le réchauffeur d'air (230) étant disposé en aval de l'échangeur de chaleur air-air (200) dans le sens de l'écoulement de l'air (x) de l'air entrant (ZU),
    - du $CO_2$ servant de fluide frigorigène se trouvant dans le circuit frigorifique,
    - et de la chaleur provenant du $CO_2$ supercritique servant de fluide frigorigène étant transmise à l'agent caloporteur dans le circuit de fluide caloporteur puis, dans le réchauffeur d'air (230), à l'air entrant (ZU) en aval de l'échangeur de chaleur air-air (200).

Fig. 1

EP 3 607 249 B1

Fig. 2

Fig. 3

Fig. 4

EP 3 607 249 B1

Fig. 5

EP 3 607 249 B1

Fig. 6

Fig. 7

Fig. 8

Fig. 9

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005002282 A1
- DE 19702903 C2
- WO 2007080162 A2

- EP 2821727 B1
- DE 112014000527 T5
- EP 2620715 A1